# EUROPEAN PATENT APPLICATION

(11) **EP 4 685 991 A1**
(43) Date of publication of application: **28.01.2026**
(21) Application number: 24875996.1
(22) Date of filing: 07.05.2024
(51) Int. Cl.: H01M 50/547, H01M 50/533, H01M 50/538

(54) **BATTERY CELL, BATTERY CELL PREPARATION METHOD, BATTERY, AND ELECTRICAL APPARATUS**

(30) Priority: 10.10.2023 CN 202311309588
(71) Applicant: Contemporary Amperex Technology Co., Limited, Ningde, Fujian 352100 (CN)
(72) Inventor: LUO, Huaen, Ningde, Fujian 352100 (CN)
(74) Representative: Kraus & Lederer PartGmbB
(86) International application number: PCT/CN2024/091504
(87) International publication number: WO 2025/077169

(57) **Abstract**

Provided are a battery cell (100), a method for preparing a battery cell (100), a battery (1000), and an electrical apparatus. The battery cell (100) comprises: a case (10) comprising a first wall (11); a terminal post (20) arranged on the first wall (11) and having a through hole (211); a cover plate (40) arranged on one side of the terminal post (20) and covering one respective end of the through hole (211); and an electrode assembly (30) comprising an active material-coated portion (31) and a conductive portion (32) connected to the active material-coated portion (31), wherein the active material-coated portion (31) is arranged in the case (10), and at least a portion of the conductive portion (32) is arranged in the through hole (211) and connected to the cover plate (40).

## Description

### CROSS-REFERENCE TO RELATED APPLICATION

The present application is presented based on Chinese patent application with application number 202311309588.4 and application date 10 October 2023, and claims priority to the Chinese patent application, the entire content of which is hereby incorporated into the present application as reference.

### TECHNICAL FIELD

The present application relates to the technical field of batteries, and particularly relates to a battery cell, a method for preparing a battery cell, a battery, and an electrical apparatus.

### BACKGROUND

With increasingly severe environmental problems, gradual maturity of people's environmental awareness and rising of oil price, more and more people will focus their eyes on new-energy vehicles when purchasing vehicles, and advantages and disadvantages of new-energy vehicles in terms of range and power performance have important influence on people's choices. At present, most new-energy vehicles use power batteries as energy storage and kinetic energy devices. The power batteries are also used in other types of vehicles. Battery energy densities of the power batteries have important influence on the range and power performance of the vehicles. Therefore, improving the energy densities of the batteries is always a direction that needs to be studied during continuous improvement and innovation of the batteries.

At present, the energy densities of the batteries still remain to be improved.

### SUMMARY

The present application is intended to solve at least one of the technical problems existing in the prior art. To this end, the present application is to present a battery cell, which can improve the volumetric energy density and gravimetric energy density of the battery cell, and can further reduce the probability of short circuit of the battery cell, and improve the working reliability and stability of the battery cell and battery.

The present application further presents a method for preparing a battery cell.

The present application further presents a battery having the above battery cell.

The present application further presents an electrical apparatus having the above battery.

A battery cell according to a first aspect of the present application comprises: a case comprising a first wall; a terminal post arranged on the first wall and having a through hole; a cover plate arranged on one side of the terminal post and covering one respective end of the through hole; and an electrode assembly comprising an active material-coated portion and a conductive portion connected to the active material-coated portion, the active material-coated portion being arranged in the case, at least a portion of the conductive portion being arranged in the through hole and connected to the cover plate.

The battery cell according to the present application is provided with a terminal post having a through hole, and at least a portion of a conductive portion is provided in the through hole, thereby reducing the space occupied by the conductive portion inside a case, so that an accommodating cavity of the case can accommodate the active material-coated portion of a larger size, thereby improving the volumetric energy density of the battery cell, further reducing the redundancy of the conductive portion in the case, reducing the probability of short circuit between the conductive portion and the active material-coated portion, reducing the probability of short circuit of the battery cell, and improving the working reliability and stability of the battery cell and the battery. In addition, the through hole is provided inside the terminal post, thereby reducing the weight of the terminal post, and further improving the gravimetric energy densities of the battery cell and the battery.

According to an example of the present application, the cover plate is connected, by welding, to the conductive portion.

In this embodiment, the cover plate is arranged to be connected, by welding, to the conductive portion, thereby increasing the strength and stability of the connection between the cover plate and the conductive portion, further improving the stability of the electrical connection between the conductive portion and the terminal post; further reducing the connection complexity between the cover plate and the conductive portion, and reducing the production costs and overall weight of the battery cell.

According to an example of the present application, the cover plate has a first welding region and a second welding region, the first welding region is connected, by welding, to the conductive portion, the second welding region is used to connect, by welding, an electrical connection plate, and the first welding region and the second welding region are different regions of the cover plate.

In this embodiment, the first welding region and the second welding region are provided to define a welding position of the conductive portion and the electrical connection plate respectively, thereby increasing the convenience and reliability for assembly of the battery cell; and moreover, the first welding region and the second welding region are set as different regions of the cover plate, thereby further effectively preventing the problem of welding quality reduction caused by the connection between two weld pools, further improving the welding quality of the conductive portion and the electrical connection plate with the cover plate, and improving the electrical connection stability of the battery cell.

According to an example of the present application, the first welding region and the second welding region are formed on both sides of a center line perpendicular to a length direction or a width direction of the cover plate respectively.

In this embodiment, by providing the first welding region and the second welding region to be formed on both sides of the center line perpendicular to the length direction or the width direction of the cover plate respectively, the first welding region and the second welding region are formed on both sides of the center line perpendicular to the length direction or the width direction of the cover plate respectively, thereby facilitating further defining positions of the first welding region and the second welding region, and increasing the convenience and reliability for assembly of the battery cell.

According to an example of the present application, a spacing between the first welding region and the second welding region is smaller than or equal to two thirds of width of the cover plate, and/or the spacing between the first welding region and the second welding region is larger than or equal to one third of the width of the cover plate.

In this embodiment, the spacing between the first welding region and the second welding region is set to be smaller than or equal to two thirds of the width of the cover plate, so that the spacing between the first welding region and the second welding region will not be too large, which is conducive to ensuring welding areas of the first welding region and the second welding region on the cover plate, so as to facilitate the connection of the conductive portion and the electrical connection plate with the cover plate, and ensure the welding quality of the conductive portion and the electrical connection plate with the cover plate, thereby improving the electrical connection stability of the battery cell; and moreover, the spacing between the first welding region and the second welding region is set to be larger than or equal to one third of the width of the cover plate, so that the spacing between the first welding region and the second welding region will not be too small, thereby effectively preventing the problem of welding quality reduction caused by the connection between the two weld pools, further improving the welding quality of the conductive portion and the electrical connection plate with the cover plate, and improving the electrical connection stability of the battery cell.

According to an example of the present application, the spacing between the first welding region and the second welding region is larger than or equal to 2 mm.

In this embodiment, the spacing between the first welding region and the second welding region is set to be larger than or equal to 2 mm, thereby effectively preventing the problem of welding quality reduction caused by the connection between the two weld pools, further improving the welding quality of the conductive portion and the electrical connection plate with the cover plate, and improving the electrical connection stability of the battery cell.

According to an example of the present application, the first welding region is fitted, by welding, with the conductive portion to form a first weld pool, the second welding region is fitted, by welding, with the electrical connection plate to form a second weld pool, and the first weld pool and the second weld pool are spaced apart.

In this embodiment, the first weld pool and the second weld pool are spaced apart, thereby effectively solving the problem of the connection between the first weld pool and the second weld pool, further improving the welding quality of the conductive portion and the electrical connection plate with the cover plate, and improving the electrical connection stability of the battery cell.

According to an example of the present application, a ratio of thickness of the cover plate to thickness of the first wall is 1-4; optionally, the ratio of the thickness of the cover plate to the thickness of the first wall is 2-3; and optionally, the thickness of the cover plate is larger than or equal to 1.5 mm and smaller than or equal to 5 mm.

In this embodiment, the ratio of the thickness of the cover plate to the thickness of the first wall is set to 1-4, so that the thickness of the cover plate can satisfy welding requirements of the conductive portion and the electrical connection plate, and so that the thickness of the cover plate will not be too large, which is conducive to lightweight of the battery cell.

In this embodiment, the ratio of the thickness of the cover plate to the thickness of the first wall is set to 2-3, to further define the thickness of the cover plate, so that the thickness of the cover plate will not be too large, which is conducive to the lightweight of the battery cell; and so that the thickness of the cover plate will not be too small, thereby satisfying the welding requirements of the conductive portion and the electrical connection plate and the structural strength requirements of the battery cell.

In this embodiment, the thickness of the cover plate is set to be larger than or equal to 1.5 mm and smaller than or equal to 5 mm, so that not only does the thickness of the cover plate satisfy the welding requirements of the conductive portion and the electrical connection plate, but also the thickness of the cover plate can be controlled not to be too large, thereby reducing the occupation of the internal space of the through hole by the cover plate, to improve the space utilization rate of the battery cell.

According to an example of the present application, the cover plate comprises a cover plate body and a boss, the cover plate body covers the one end of the through hole, the boss is arranged on one side surface of the cover plate body facing the electrode assembly and extends into the through hole, and the conductive portion is connected to the boss.

In this embodiment, the cover plate body and the boss are arranged, thereby increasing the sealing effect between the cover plate and the terminal post, further reducing the risk of electrolyte solution leakage from the through hole, improving the reliability of the battery cell; further reducing the occurrence of pool connection during welding, further improving the welding quality of the conductive portion and the electrical connection plate with the cover plate, and improving the electrical connection stability of the battery cell.

According to an example of the present application, height of the boss protruding from the one side surface of the cover plate body is 1 mm-5 mm; optionally, 1.5 mm-3 mm.

In this embodiment, the height of the boss protruding from the one side surface of the cover plate body is set to be 1 mm-5 mm, so that thickness of the boss will not be too large, which is conductive to reducing the occupation of the internal space of the through hole by the cover plate, thereby improving the space utilization rate of the battery cell; so that the thickness of the boss will not be too small, and so that the thickness of the boss satisfies the welding requirements of the conductive portion, to increase the stability of the connection between the conductive portion and the boss.

In this embodiment, the height of the boss protruding from the one side surface of the cover plate body is set to be 1.5 mm-3 mm, so that the thickness of the boss satisfies the welding requirements of the conductive portion, thereby further reducing the occupation of the internal space of the through hole by the cover plate, and further improving the space utilization rate of the battery cell.

According to an example of the present application, the boss is clearance fitted with the one end of the through hole, and a fit clearance between the boss and the through hole is 0-0.1 mm.

In this embodiment, the boss is arranged to be clearance fitted with the one end of the through hole, and the fit clearance between the boss and the through hole is 0-0.1 mm, which is conducive to the boss entering and exiting the through hole, thereby reducing the difficulty in assembly of the cover plate and the terminal post.

According to an example of the present application, the fit clearance between the boss and the through hole is smaller than or equal to 0.05 mm.

In this embodiment, the fit clearance between the boss and the through hole is set to be smaller than or equal to 0.05 mm, thereby further reducing the clearance between the boss and an inner wall of the through hole, further improving the blocking effect of the boss on the through hole, reducing the risk of electrolyte solution leakage from the cover plate, and improving the reliability of the battery cell.

According to an example of the present application, the terminal post is a negative electrode terminal post, the cover plate body and the boss are separate members, material of the cover plate body is different from material of the boss, the material of the boss is same as material of the conductive portion, and when the boss is welded to the conductive portion, pool depth on the cover plate is smaller than the thickness of the boss.

In this embodiment, when the terminal post is the negative electrode terminal post, the cover plate body and the boss are set as separate members, and the material of the boss is same as the material of the conductive portion, so that the material of the boss is adapted to the material of the conductive portion, thereby increasing the welding quality of the boss and the conductive portion, and increasing the stability of the connection between the boss and the conductive portion; and in addition, when the boss is welded to the conductive portion, the pool depth on the cover plate is smaller than the thickness of the boss, and the welding position is controlled between same materials, thereby further increasing the welding quality of the boss and the conductive portion, and reducing the welding difficulty of the boss and the conductive portion.

According to an example of the present application, the terminal post is a positive electrode terminal post, the boss is integrally formed with the cover plate body, and when the cover plate is welded to the conductive portion, pool depth on the boss is larger than the thickness of the boss.

In this embodiment, when the terminal post is the positive electrode terminal post, the boss is arranged to be integrally formed with the cover plate body, so that the cover plate satisfies the requirements for welding with the electrical connection plate and the conductive portion, thereby can further reducing the production process of the cover plate, reducing the production steps of the cover plate, further increasing the production rate of the cover plate, and reducing the production costs of the cover plate.

According to an example of the present application, the terminal post is connected, by welding, to the cover plate.

In this embodiment, the terminal post is arranged to be connected, by welding, to the cover plate, thereby increasing the stability and airtightness of the connection between the terminal post and the cover plate, further improving airtight seal of the battery cell, and improving the reliability of the battery cell.

According to an example of the present application, the terminal post is a hollow annular shape and defines the through hole inside.

In this embodiment, the terminal post is arranged to be a hollow annular shape and defines the through hole on the inner side, thereby reducing the weight of the terminal post to a certain extent, and further improving the gravimetric energy densities of the battery cell and the battery; and moreover, internal cavity of the hollow annular shape has a large volume, so that the conductive portion can very easily extend out of the through hole, thereby reducing the welding difficulty of the conductive portion and the cover plate, reducing the difficulty in assembly of the battery cell, and improving the assembly rate of the battery cell.

According to an example of the present application, the terminal post comprises: an annular terminal post body defining the through hole inside; a first ring connected to one end of the terminal post body facing the electrode assembly, extending outward along a radial direction of the terminal post body and extending along a circumferential direction of the terminal post body to form an annular shape; and a second ring connected to other end of the terminal post body facing away from the electrode assembly, extending outward along the radial direction of the terminal post body and extending along the circumferential direction of the terminal post body to form an annular shape.

In this embodiment, the first ring and the second ring are arranged at both ends of the terminal post body respectively, and the first ring and the second ring can improve the structural strength of the terminal post body to a certain extent, so that the terminal post has better overall structural strength, the terminal post can be more stably and reliably connected and fixed with a tab, and the terminal post can be better involved in power transmission operation of the battery cell. The first ring and the second ring can be fitted with the terminal post body to form a clamping groove structure, so as to facilitate the installation and fixation of the terminal post in the battery cell. The first ring and the second ring are simple in structure and easy to use.

According to an example of the present application, a groove is formed on one side surface of the terminal post facing away from the electrode assembly, the through hole is formed inside of the groove and runs throughout a bottom wall of the groove, and the cover plate is arranged in the groove.

In this embodiment, the groove is formed on the one side surface of the terminal post facing away from the electrode assembly, so that the cover plate can be conveniently positioned during fixation to the terminal post, and the connection and fixation are stable and reliable.

According to an example of the present application, a side wall of the groove obliquely extends outward along a radial direction of the through hole in a direction from the electrode assembly towards the cover plate.

In this embodiment, the side wall of the groove is arranged to obliquely extend outward along the radial direction of the through hole, thereby functioning to guide assembly of the cover plate and the terminal post to a certain extent, so that the cover plate can be conveniently fixed in the groove with a simple structure and easy assembly. Moreover, when the cover plate is connected, by welding, to the terminal post, a peripheral edge of the cover plate and an oblique side wall of the groove can further increase the welding width during welding, so that the cover plate and the terminal post have high welding quality, thereby increasing the sealing effect of welding between the cover plate and the terminal post, and increasing the airtightness of the battery cell.

According to an example of the present application, one side surface of the cover plate facing away from the electrode assembly is flush with one end surface of one end of the terminal post facing away from the electrode assembly.

In this embodiment, the one side surface of the cover plate facing away from the electrode assembly is arranged to be flush with the one end surface of the one end of the terminal post facing away from the electrode assembly, so that the cover plate can be fitted with the terminal post to form a continuous plane, thereby reducing the space occupation of the cover plate to a certain extent and increasing the electrical connection surface of the terminal post of the battery cell, improving the energy density of the battery cell to a certain extent, conveniently electrically connecting the battery cell to an electrical connecting element through the one end of the terminal post facing away from the electrode assembly; and further improving beauty of the appearance of the battery cell.

According to an example of the present application, the active material-coated portion comprises a current collector and an active material layer arranged on the current collector, the conductive portion comprises a tab portion electrically connected to the current collector, the tab portion comprises a plurality of tab plates, the plurality of tab plates converge at a position close to the current collector to form a first converged portion, the plurality of tab plates converge at a position away from the current collector and are connected to form a second converged portion, the first converged portion connects the second converged portion and the active material-coated portion, and at least a portion of the second converged portion is accommodated in the through hole.

In this embodiment, the plurality of tab plates are arranged to converge and be connected to form the second converged portion, so that the second converged portion can have small size and thickness, thereby making it easier for the tab portion to extend into the through hole for connection to the cover plate, further increasing the convenience of connection between the conductive portion and the cover plate, further effectively reducing the risk of occurrence of short circuit between the tab plates and the active material-coated portion below the tab portion due to inverted insertion of the tab plates caused by branching of the plurality of tab plates, and improving the reliability of the battery cell. In addition, at least a portion of the second converged portion is arranged to be accommodated in the through hole, thereby further making full use of the space of the terminal post, and improving the volumetric energy density of the battery cell.

According to an example of the present application, the conductive portion is fixedly connected to the cover plate through the second converged portion.

In this embodiment, the conductive portion is arranged to be fixedly connected to the cover plate through the second converged portion, thereby simplifying the structure of the battery cell, reducing the use of parts, simplifying the assembly process, and improving the assembly efficiency.

According to an example of the present application, at least a portion of the first converged portion is accommodated in the through hole.

In this embodiment, at least a portion of the first converged portion is arranged to be accommodated in the through hole, thereby making fuller use of the space in the terminal post, further reducing the space occupied by the tab portion in the case to accommodate the active material-coated portion of a larger size, improving the volumetric energy density of the battery cell, further better reducing the redundancy of the tab portion in the case, and further reducing the probability of short circuit between the tab portion and the active material-coated portion.

According to an example of the present application, the active material-coated portion comprises a current collector and an active material layer arranged on the current collector, the conductive portion comprises a tab portion electrically connected to the current collector, the tab portion comprises a plurality of tab plates, the plurality of tab plates converge at a position close to the current collector to form a first converged portion, the plurality of tab plates converge at a position away from the current collector and are connected to form a second converged portion, the first converged portion connects the second converged portion and the active material-coated portion; the conductive portion further comprises an adapter plate, the adapter plate is connected to the second converged portion, the conductive portion is electrically connected to the cover plate through the adapter plate, and at least a portion of the adapter plate is accommodated in the through hole.

In this embodiment, the adapter plate is arranged to accommodate at least a portion of the second converged portion and at least a portion of the adapter plate in the through hole, thereby making fuller use of the space in the terminal post, and further reducing the space occupied by the conductive portion in the case, to improve the volumetric energy density of the battery cell. Moreover, the adapter plate can be further used to avoid position of the second converged portion for welding to the terminal post, so that the welding of the adapter plate and the terminal post is more reliable with a small risk of weld crack, and the reliability and stability of the battery cell can be further improved; and the terminal post is electrically connected the tab plates through the adapter plate, which can further simplify the structure of the tab plates.

According to an example of the present application, at least a portion of the second converged portion is located in the through hole; or the second converged portion is entirely located in the through hole, and at least a portion of the first converged portion is located in the through hole.

In this embodiment, at least a portion of the second converged portion is arranged to be located in the through hole, thereby making full use of the space in the terminal post, and further reducing the space occupied by the tab portion in the case to improve the volumetric energy density of the battery cell; and the second converged portion is arranged to be entirely located in the through hole, and at least a portion of the first converged portion is arranged to be located in the through hole, thereby making fuller use of the space in the terminal post, substantially reducing the space occupied by the tab portion in the case, further substantially improving the volumetric energy density of the battery cell; further reducing the redundancy of the tab portion in the case, and further reducing the probability of short circuit between the tab portion and the active material-coated portion.

According to an example of the present application, the second converged portion extends along a surface of the cover plate, one end of the first converged portion is connected to the active material-coated portion in a direction from the electrode assembly towards the cover plate, and other end of the first converged portion obliquely extends towards a peripheral wall of the through hole and extends to connect to one end of the second converged portion.

In this embodiment, the second converged portion is arranged to extend along the surface of the cover plate, the one end of the first converged portion is arranged to be connected to the active material-coated portion in the direction from the electrode assembly towards the cover plate, and the other end of the first converged portion is arranged to obliquely extend towards the peripheral wall of the through hole and extend to connect to the one end of the second converged portion, thereby increasing the length of the first converged portion accommodated inside the through hole, further effectively reducing the space occupancy of the tab inside the battery cell, accommodating the active material-coated portion of a larger size, improving the volumetric energy density of the battery cell, better reducing the redundancy of the tab portion in the case, further reducing the probability of short circuit between the tab portion and the active material-coated portion, and increasing the stability of the battery cell.

According to a method for preparing a battery cell in a second aspect of the present application, the preparation method comprises: passing one end of a conductive portion through a through hole of a terminal post, and then extending out of other side of the terminal post; connecting, by welding, the one end of the conductive portion to a cover plate on the other side of the terminal post; covering the cover plate on one end of the through hole, and accommodating the conductive portion in the through hole; and fixedly connecting the cover plate to the terminal post.

According to the method for preparing a battery cell of the present application, the cover plate can be connected, by welding, to the conductive portion on the outside of the battery cell, thereby reducing the damage to the battery cell caused by welding slag falling inside the battery cell during welding, further improving the reliability of the battery cell; accommodating the conductive portion in the through hole, and reducing the space occupied by the conductive portion inside the case, so that the case can accommodate the active material-coated portion of a larger volume, further improving the energy density of the battery cell; additionally further reducing the redundancy of the conductive portion, further reducing the probability of short circuit between the conductive portion and the active material-coated portion, and increasing the stability of the battery cell.

According to an example of the present application, the connecting, by welding, the one end of the conductive portion to the cover plate on the other side of the terminal post comprises: press-fitting the other end of the conductive portion onto one side surface of the cover plate; and laser-welding the other end of the conductive portion to the cover plate.

In this embodiment, the other end of the conductive portion is press-fitted onto the one side surface of the cover plate, thereby ensuring the welding gap to implement laser-welding, and improving the welding quality; and the conductive portion is laser-welded to the cover plate, thereby increasing the connection speed of the conductive portion and the cover plate, and improving the welding quality of the conductive portion and the cover plate.

A battery according to a third aspect of the present application comprises the battery cell according to the first aspect of the present application; or comprising the battery cell prepared using the method for preparing a battery cell in the second aspect of the present application.

The battery according to the present application is provided with the battery cell in the above first aspect or the battery cell prepared using the method for preparing a battery cell in the above second aspect, thereby improving the overall performance of the battery.

An electrical device according to a fourth aspect of the present application comprises the battery according to the third aspect of the present application, wherein the battery is configured to provide electrical energy.

The electrical device according to the present application is provided with the battery in the above third aspect, thereby improving the overall performance of the electrical device.

Additional aspects and advantages of the present application will be partially given in the following description, and will partially become apparent from the following description, or will be understood from the practice of the present application.

### BRIEF DESCRIPTION OF DRAWINGS

FIG. 1 is a schematic diagram of a vehicle according to an embodiment of the present application;
FIG. 2 is an exploded view of a battery according to an embodiment of the present application;
FIG. 3 is a schematic partial view of a battery cell according to an embodiment of the present application;
FIG. 4 is a schematic partial view of another state of a battery cell according to an embodiment of the present application, wherein the battery cell is assembled;
FIG. 5 is a schematic partial view of still another state of a battery cell according to an embodiment of the present application, wherein a cover plate covers a through hole;
FIG. 6 is a schematic diagram of the cover plate shown in FIG. 5;
FIG. 7 is a schematic diagram of a terminal post shown in FIG. 5;
FIG. 8 is a schematic diagram of another view of a terminal post shown in FIG. 5;
FIG. 9 is a schematic diagram of still another view of a terminal post shown in FIG. 5;
FIG. 10 is a schematic diagram of yet another view of a terminal post shown in FIG. 5;
FIG. 11 is a schematic assembly diagram of a battery cell according to an embodiment of the present application;
FIG. 12 is a schematic assembly diagram of another state of a battery cell according to an embodiment of the present application, wherein one end of a conductive portion extends out of a through hole;
FIG. 13 is a schematic assembly diagram of still another state of a battery cell according to an embodiment of the present application, wherein the conductive portion is laser-welded to the cover plate; and
FIG. 14 is a schematic diagram of an electrode assembly shown in FIG. 3.

### Reference numerals:

Vehicle 1;
Battery 1000;
Battery cell 100;
Case 10; First wall 11;
Terminal post 20; Terminal post body 21; Through hole 211; Groove 212; First ring 22; Second ring 23;
Electrode assembly 30; Active material-coated portion 31; Conductive portion 32; Tab portion 321; First converged portion 3211; Second converged portion 3212;
Cover plate 40; Cover plate body 41; Boss 42; First welding region 43; First weld pool 431; Second welding region 44; Second weld pool 441;
Electrical connection plate 50;
Box 200; Main box part 201; End cover 202;
Controller 2000; Motor 3000.

### DETAILED DESCRIPTION

Embodiments of the technical solutions of the present application will be described in detail below with reference to the accompanying drawings. The following embodiments are only used to more clearly illustrate the technical solutions of the present application, therefore only as examples, and cannot be used to limit the scope of protection of the present application.

Unless otherwise defined, all technical and scientific terms used herein have the same meanings as those commonly understood by those skilled in the art to which the present application pertains to. The terms used herein are for the purpose of describing specific embodiments only and are not intended to limit the present application. The terms "including" and "having" and any variations thereof in the specification and claims of the present application and the aforementioned BRIEF DESCRIPTION OF DRAWINGS are intended to cover non-exclusive inclusion.

In the description of the embodiments of the present application, the technical terms "first", "second", etc., are used only to distinguish between different objects and are not to be understood as indicating or implying a relative importance or implicitly specifying the number, particular order, or primary and secondary relationship of the technical features indicated. In the description of the embodiments of the present application, the meaning of "a plurality of' is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. In addition, the character "/" herein generally means that there is an "or" relationship between associated objects therebefore and thereafter.

In the description of the embodiments of the present application, the term "plurality of" means more than two (including two).

In the description of the embodiments of the present application, the directions or positional relationships indicated by the technical terms, such as "center," "longitudinal," "transverse," "length," "width," "thickness," "above," "below," "front," "back," "left," "right," "vertical," "horizontal," "top," "bottom," "inner," "outer," "axial," "radial," and "circumferential," are based on the directions or positional relationships shown in the drawings, are only provided to facilitate describing the embodiments of the present application and simplifying the description, rather than indicating or implying that the apparatus or element referred to must have a particular direction, or be configured and operated in a particular direction, and therefore cannot be construed as limiting the embodiments of the present application.

In the description of the embodiments of the present application, unless otherwise explicitly specified and defined, the technical terms, such as "mounting", "joining", "connecting" and "fixing" should be understood in a broad sense, for example, they may be fixed connection, detachable connection, or integration; or they may be mechanical connection or electrical connection; or they may be direct connection, indirect connection through an intermediate medium, or internal connection of two elements or interaction relationship between two elements. For those of ordinary skill in the art, the specific meanings of the above terms in the embodiments of the present application can be understood according to specific situations.

At present, from the perspective of the development of the market situation, power batteries are increasingly more widely used. Power batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. With the continuous expansion of the application field of the power batteries, the market demand is also constantly expanding.

When a battery cell in the related art is manufactured, a current collector is coated with an active material layer and then cut to obtain an electrode plate consisting of the current collector coated with the active material layer (denoted as an active material-coated portion) and the current collector uncoated with the active material layer (denoted as a tab plate). Then, positive and negative electrode plates and a separator are sequentially stacked or winded to obtain an electrode assembly. A plurality of tab plates in the electrode assembly are stacked to form a tab portion. A terminal post is provided on a case of the battery cell, and one side surface of the terminal post facing the active material-coated portion is an inner end surface of the terminal post. The battery cell is manufactured generally by directly welding to the tab portion to the inner end surface of the terminal post, or indirectly welding the tab portion to the inner end surface of the terminal post through an adapter plate to ensure normal charge-discharge operations.

However, when the battery cell adopts the above structure, both the tab portion and the adapter plate are piled up between the active material-coated portion and the inner end surface of the terminal post, occupying a large space, so that when the case has a constant size, size of the active material-coated portion cannot be increased, and so that it is difficult to improve the energy density of the battery cell. Moreover, due to design or manufacturing reasons, the tab portion usually has a large length. When the space between the active material-coated portion and the inner end surface of the terminal post is small, the electrode assembly has a problem of tab portion redundancy after entering the case, which easily leads to short circuit between the tab portion or the adapter plate and the active material-coated portion, thereby affecting the reliability and stability of the battery cell.

Based on the above considerations, in order to reduce the space occupied by the tab to improve the energy density of the battery cell, the present application provides a battery cell, wherein a through hole is provided inside a terminal post of the battery cell, and at least a portion of the conductive portion is arranged in the through hole, to reduce the space occupied by the portion in the case, so that more space can be saved in the case to accommodate the active material-coated portion, thereby increasing the volume of the active material-coated portion, contributing to improving the energy density of the battery cell, reducing the redundancy of the tab portion or the adapter plate in the case, reducing the probability of short circuit between the tab portion or the adapter plate and the active material-coated portion, reducing the probability of some reliability-related problems caused by short circuit, and improving the working reliability and stability of the battery cell and the battery.

The battery cell disclosed in an embodiment of the present application can be used for an electrical apparatus using a battery as a power source or various energy storage systems using a battery as an energy storage element. The electrical apparatus may be, but is not limited to, a mobile phone, a tablet, a laptop, an electric toy, an electric tool, a battery vehicle, an electric vehicle, a ship, a spacecraft, and the like. The electric toy may include a stationary or mobile electric toy, such as a game machine, an electric car toy, an electric ship toy, or an electric airplane toy, and the spacecraft may include an airplane, a rocket, an aerospace plane, a spaceship, and the like.

For ease of description, the following embodiments are illustrated when the electrical apparatus in an embodiment of the present application is, for example, a vehicle 1.

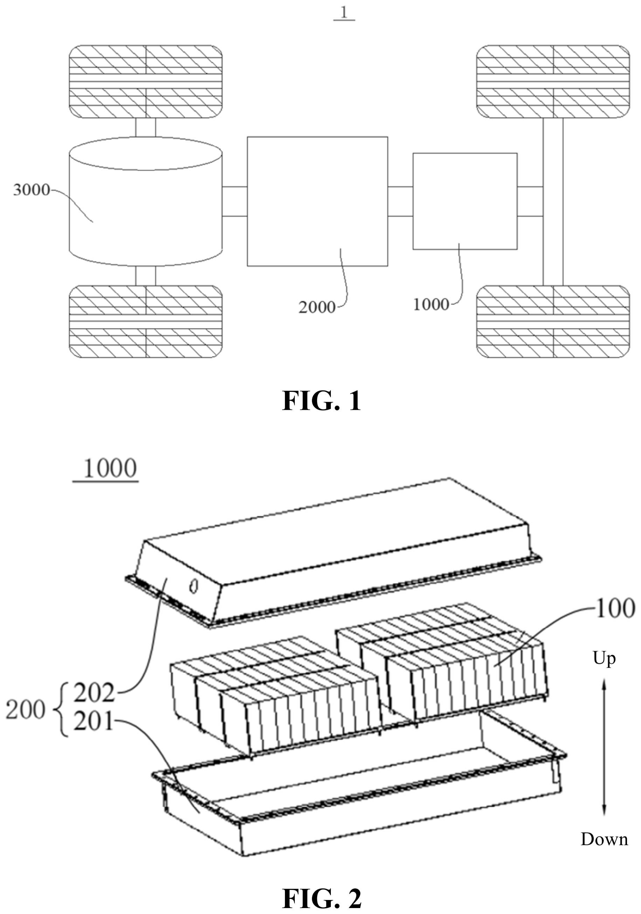

Referring to FIG. 1, FIG. 1 is a schematic diagram of a vehicle 1 provided in some embodiments of the present application. The vehicle 1 may be a fuel vehicle, a gas vehicle, or a new-energy vehicle. The new-energy vehicle may be, e.g., an all-electric vehicle, a hybrid electric vehicle, or an extended range electric vehicle. A battery 1000 is provided inside the vehicle 1. The battery 1000 may be arranged at the bottom or head or tail of the vehicle 1. The battery 1000 may be configured to power the vehicle 1, for example, the battery 1000 may serve as an operating power source of the vehicle 1. The vehicle 1 may further comprise a controller 2000 and a motor 3000. The controller 2000 is configured to control the battery 1000 to power the motor 3000, for example, serve to satisfy operating power demand when the vehicle 1 is starting, navigating, and running.

In some embodiments of the present application, the battery 1000 not only can serve as an operating power source of the vehicle 1, but also can serve as a driving power source of the vehicle 1, to provide driving power for the vehicle 1 in place of or partially in place of fuel or natural gas.

Referring to FIG. 2, FIG. 2 is an exploded view of a battery 1000 in some embodiments of the present application. The battery 1000 comprises a box 200 and a battery cell 100, the box 200 has a cavity, and the battery cell 100 is accommodated in the cavity of the box 200. The box 200 is configured to provide an accommodating space for the battery cell 100, and the box 200 may adopt various structures. In some embodiments, the box 200 may comprise a first part (such as a main box part 201 described below) and a second part (such as an end cover 202 described below), the first part and the second part cover each other, and the first part and the second part jointly define an accommodating space for accommodating the battery cell 100. The second part may be a hollow structure with one opening end, the first part may be a platy structure, and the first part covers on an opening side of the second part, such that the first part and the second part jointly define the accommodating space; or the first part and the second part may each be a hollow structure with one opening side, and the opening side of the first part covers on the opening side of the second part. Of course, the box 200 formed by the first part and the second part may be various shapes, such as a cylinder and a cuboid.

In the battery 1000, there may be a plurality of battery cells 100, and there may be series connection, or parallel connection, or parallel-series connection among the plurality of battery cells 100. The parallel-series connection means that there are both series connection and parallel connection among the plurality of battery cells 100. The plurality of battery cells 100 can be connected directly by series connection or parallel connection or parallel-series connection, and then the entirety formed by the plurality of battery cells 100 is accommodated in the box 200. Of course, the battery 1000 may also be an entirety formed by series connection or parallel connection or parallel-series connection of a plurality of battery modules that are formed by series connection or parallel connection or parallel-series connection of the plurality of battery cells 100, and is accommodated in the box 200. The battery 1000 may further comprise other structures. For example, the battery 1000 may further comprise a bus component configured to implement electrical connection among the plurality of battery cells 100.

Each of the battery cells 100 may be a secondary battery or a primary battery; or may be, but is not limited to, a lithium-sulfur battery, a sodium-ion battery, or a magnesium-ion battery. The battery cell 100 may be a cylinder, a flat body, a cuboid, or other shape.

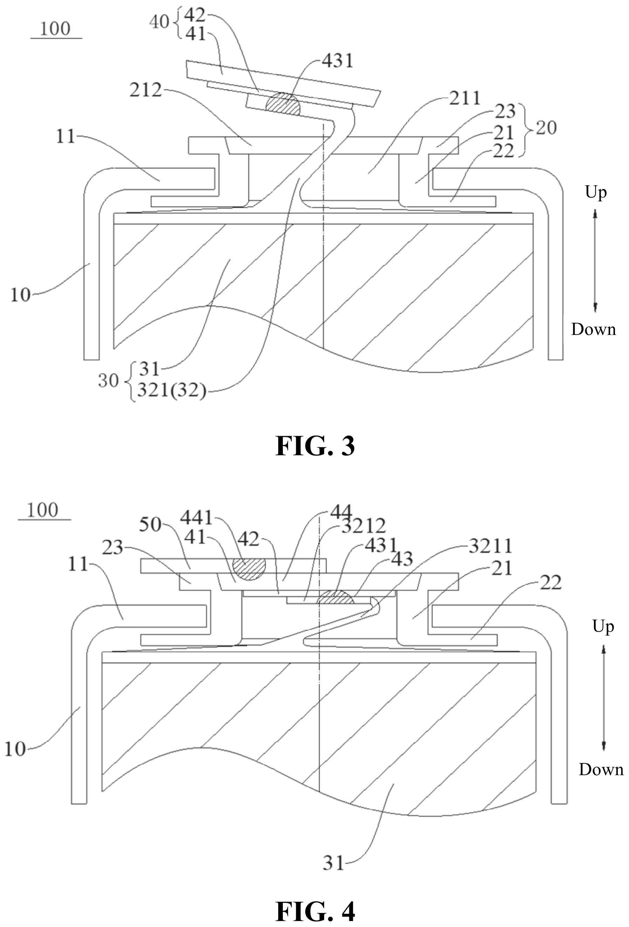

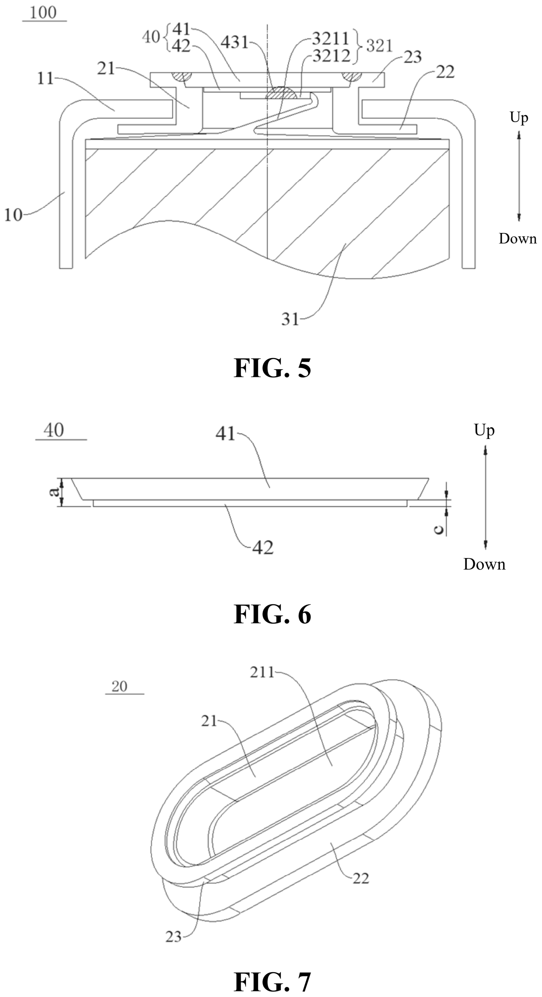

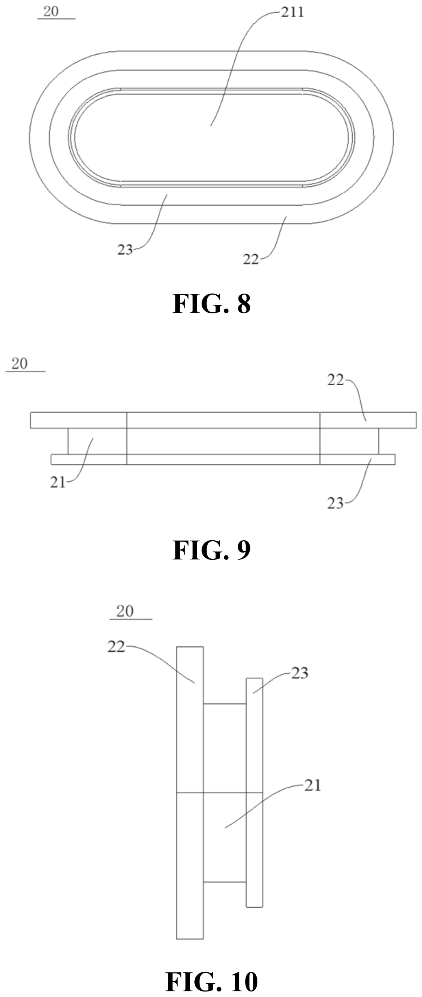

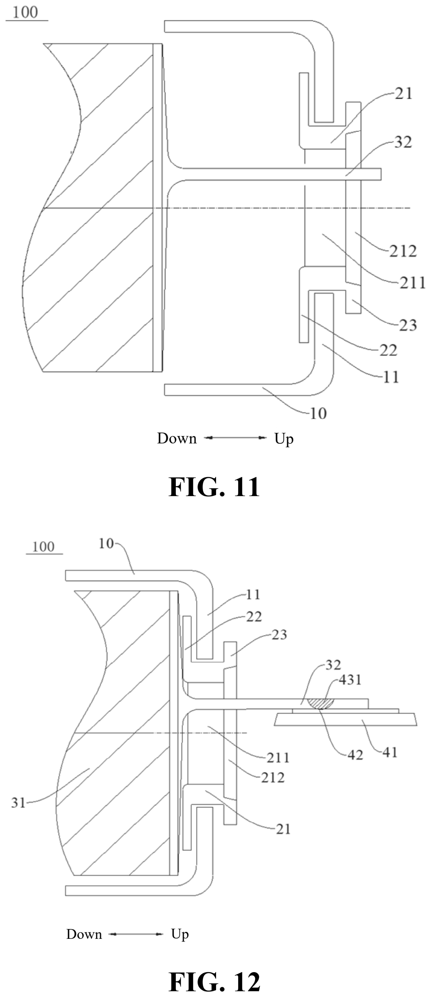

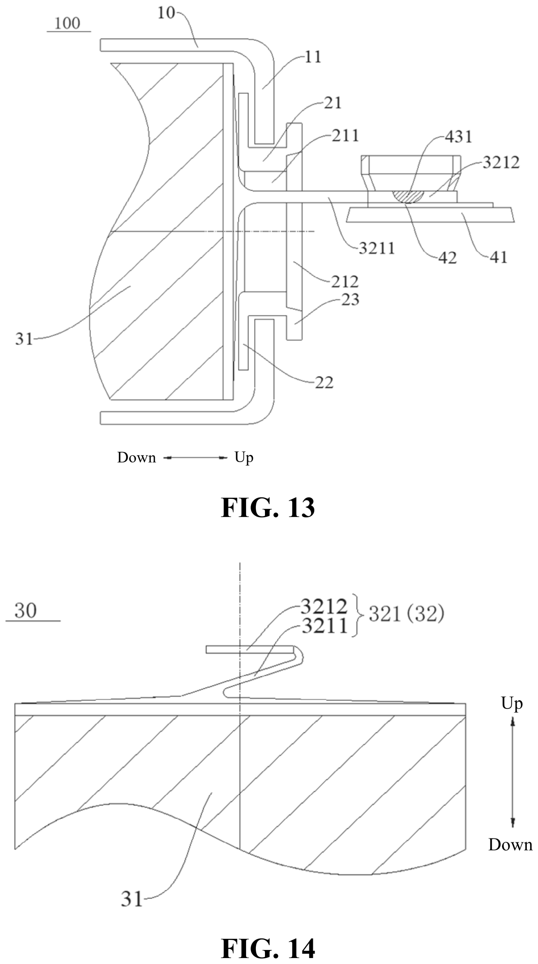

The battery cell 100 according to an embodiment in the first aspect of the present application is described below with reference to FIGS. 3-14. FIG. 3 is a schematic partial view of a battery cell 100 according to some embodiments of the present application. FIG. 4 is a schematic partial view of another state of a battery cell 100 according to some embodiments of the present application, wherein the battery cell 100 is assembled. FIG. 5 is a schematic partial view of still another state of the battery cell 100 according to some embodiments of the present application, wherein a cover plate 40 covers a through hole 211. FIG. 6 is a schematic diagram of the cover plate 40 shown in FIG. 5. FIG. 7 is a schematic diagram of a terminal post 20 shown in FIG. 5, FIG. 8 is a schematic diagram of another view of a terminal post 20 shown in FIG. 5. FIG. 9 is a schematic diagram of still another view of a terminal post 20 shown in FIG. 5. FIG. 10 is a schematic diagram of yet another view of a terminal post 20 shown in FIG. 5. FIG. 11 is a schematic assembly diagram of a battery cell 100 according to some embodiments of the present application. FIG. 12 is a schematic assembly diagram of another state of a battery cell 100 according to some embodiments of the present application, wherein one end of a conductive portion 32 extends out of a through hole 211. FIG. 13 is a schematic assembly diagram of still another state of a battery cell 100 according to some embodiments of the present application, wherein a conductive portion 32 is laser-welded to a cover plate 40. FIG. 14 is a schematic diagram of an electrode assembly 30 shown in FIG. 3.

An embodiment of the present application presents a battery cell 100. As shown in FIG. 3, the battery cell 100 comprises: a case 10, a terminal post 20, a cover plate 40, and an electrode assembly 30. Specifically, the case 10 comprises a first wall 11; the terminal post 20 is arranged on the first wall 11 and has a through hole 211; the cover plate 40 is arranged on one side of the terminal post 20 and covers one respective end of the through hole 211; and the electrode assembly 30 comprises an active material-coated portion 31 and a conductive portion 32 connected to the active material-coated portion 31, the active material-coated portion 31 is arranged in the case 10, and at least a portion of the conductive portion 32 is arranged in the through hole 211 and connected to the cover plate 40.

The shape of the case 10 may be adjusted with the type of the battery cell 100. For example, when the battery cell 100 is a square battery 1000, the case 10 is square, and when the battery cell 100 is a cylindrical battery 1000, the case 10 is cylindrical. In the embodiments of the present application, the description is provided with the square case 10 as an example. As shown in FIG. 3, the case 10 may be, e.g., an aluminum case or a stainless-steel case. The case 10 is configured to accommodate the electrode assembly 30 in the battery cell 100 and fix the terminal post 20. The first wall 11 of the case 10 is formed at one end in a length direction of the case 10 (an up-down direction as shown in FIG. 3). When the battery cell 100 is assembled, the electrode assembly 30 may be placed in an accommodating cavity of the case 10, and the terminal post 20 is fixed on the first wall 11 of the case 10. Specifically, the first wall 11 of the case 10 may be provided with a mounting hole that runs throughout the first wall 11 along a thickness direction of the first wall 11 (the up-down direction as shown in FIG. 3), and the terminal post 20 is arranged in the mounting hole and fixedly connected to the case 10, for example, the terminal post 20 may be fixed to the case 10 by welding or riveting.

The terminal post 20 is configured to connect the battery cell 100 to an electrical connecting element and transmit electrical energy. The material of the terminal post 20 may be, e.g., copper, aluminum, zinc, and alloys thereof. The shape of the terminal post 20 may be set to, e.g., a round or rectangular structure based on design requirements. Generally, the number of terminal posts 20 is at least two. Specifically, the terminal posts 20 are at least one positive electrode terminal post and at least one negative electrode terminal post. For example, when the number of terminal posts 20 is two, one is a positive electrode terminal post, and the other is a negative electrode terminal post, and the two are electrically connected to positive and negative tabs of the electrode assembly 30, respectively. For another example, when the number of terminal posts 20 is four, two may be positive electrode terminal posts and the other two may be negative electrode terminal posts. In this case, both positive electrode terminal posts are electrically connected to a positive tab of the electrode assembly 30, and both negative electrode terminal posts are electrically connected to a negative tab of the electrode assembly 30.

The cover plate 40 is airtightly connected to the terminal post 20 for covering the through hole 211, thereby sealing the battery cell 100 to isolate the inside and the outside of the battery cell 100, and further improving the reliability of the battery cell 100. Moreover, the conductive portion 32 is electrically connected to the cover plate 40, and the cover plate 40 is connected to the terminal post 20, so that the conductive portion 32 can be electrically connected to the terminal post 20, thereby transmitting electrical energy of the battery cell 100. Optionally, the material of the cover plate 40 may be consistent with the material of the terminal post 20, and the shape of the cover plate 40 may be designed based on the shape of the through hole 211.

The electrode assembly 30 is usually formed by stacking or winding electrode plates and a separator. The electrode plates comprise a positive electrode plate and a negative electrode plate. The positive tab led out from the positive electrode plate is electrically connected to the positive electrode terminal post 20, and the negative tab led out from the negative electrode plate is electrically connected to the negative electrode terminal post 20.

The active material-coated portion 31 is a portion of the electrode assembly 30 coated with an active material, and can assist in deintercalation of metal ions during charge-discharge of the battery cell 100. The conductive portion 32 is a metal structure electrically connecting the active material-coated portion 31 and the terminal post 20, and is not coated with an active material. Both the positive electrode terminal post and the negative electrode terminal post can be electrically connected to the active material-coated portion 31 through the conductive portion 32, so that charge-discharge operations of the battery cell 100 can be carried out.

It should be noted that in an embodiment of the present application, the active material-coated portion 31 is classified as a positive electrode active material-coated portion and a negative electrode active material-coated portion, wherein the positive electrode active material-coated portion comprises a portion of a positive electrode current collector coated with a positive electrode active material layer, and the negative electrode active material-coated portion comprises a portion of a negative electrode current collector coated with a negative electrode active material layer. The conductive portion 32 is classified as a positive electrode conductive portion and a negative electrode conductive portion, wherein the positive electrode conductive portion electrically connects the positive electrode active material-coated portion and the positive electrode terminal post, and the negative electrode conductive portion electrically connects the negative electrode active material-coated portion and the negative electrode terminal post.

For ease of description, in the embodiments of the present application, positive and negative electrodes of the terminal post 20, the conductive portion 32, and the active material-coated portion 31 will not be described distinguishedly. The terminal post 20, the conductive portion 32, and the active material-coated portion 31 involved in the embodiments of the present application and related descriptions thereof can all be adapted to structures, such as the positive electrode terminal post, the negative electrode terminal post, the positive electrode active material-coated portion, the negative electrode active material-coated portion, the positive conductive portion, and the negative conductive portion.

In this embodiment, the terminal post 20 has a through hole 211, and the through hole 211 runs throughout the terminal post 20 along a direction from the electrode assembly 30 towards the cover plate 40, so that a hollow structure is formed inside the terminal post 20. The hollow structure can reduce the weight of the terminal post 20 to a certain extent, and then can improve the gravimetric energy densities of the battery cell 100 and the battery 1000 to a certain extent.

At least a portion of the conductive portion 32 is arranged in the through hole 211, that is, the conductive portion 32 may be partially arranged in the through hole 211, or may be entirely arranged in the through hole 211. A portion or all of the conductive portion 32 is accommodated in the through hole 211, so that the portion of the conductive portion 32 located in the accommodating portion can occupy the space in the terminal post 20, thereby reducing the space occupied by the conductive portion 32 in the case 10. When the case 10 has a constant size, some space can be saved in the case 10 to accommodate the active material-coated portion 31 of a larger size, thereby improving the volumetric energy density of the battery cell 100, further reducing the redundancy of the conductive portion 32 in the case 10 at least to a certain extent, reducing the probability of short circuit between the conductive portion 32 and the active material-coated portion 31, reducing the probability of short circuit of the battery cell 100, and improving the working reliability and stability of the battery cell 100 and the battery 1000.

The battery cell 100 according to an embodiment of the present application is provided with a terminal post 20 having a through hole 211, and at least a portion of a conductive portion 32 is provided in the through hole 211, thereby reducing the space occupied by the conductive portion 32 inside a case 10, so that an accommodating cavity of the case 10 can accommodate an active material-coated portion 31 of a larger size, thereby improving the volumetric energy density of the battery cell 100, further reducing the redundancy of the conductive portion 32 in the case 10, reducing the probability of short circuit between the conductive portion 32 and the active material-coated portion 31, reducing the probability of short circuit of the battery cell 100, and improving the working reliability and stability of the battery cell 100 and the battery 1000. In addition, the through hole 211 is provided inside the terminal post 20, thereby reducing the weight of the terminal post 20, and further improving the gravimetric energy densities of the battery cell 100 and the battery 1000.

According to an example of the present application, the cover plate 40 is connected, by welding, to the conductive portion 32.

Welding by the welded connection can connect two objects of different sizes and different materials with simple operations and without an additional external material, thereby simplifying the connection process of the cover plate 40 and the conductive portion 32, and reducing the production costs and overall weight of the battery cell 100; and moreover, the welded connection has high strength and good airtightness, thereby increasing the strength and stability of the connection between the cover plate 40 and the conductive portion 32, and improving the stability of the electrical connection between the conductive portion 32 and the terminal post 20.

In this embodiment, the cover plate 40 is provided to be connected, by welding, to the conductive portion 32, thereby increasing the strength and stability of the connection between the cover plate 40 and the conductive portion 32, further improving the stability of the electrical connection between the conductive portion 32 and the terminal post 20; further reducing the complexity of the connection between the cover plate 40 and the conductive portion 32, and reducing the production costs and overall weight of the battery cell 100.

According to an example of the present application, as shown in FIG. 4, the cover plate 40 has a first welding region 43 and a second welding region 44, the first welding region 43 is connected, by welding, to the conductive portion 32, the second welding region 44 is used to connect, by welding, an electrical connection plate 50, and the first welding region 43 and the second welding region 44 are different regions of the cover plate 40.

Specifically, the electrical connection plate 50 is connected, by welding, to one side surface of the cover plate 40 facing away from the electrode assembly 30, and may be configured to connect two adjacent battery cells 100 to implement series connection of the battery cells 100; one end of the conductive portion 32 is connected to the electrode assembly 30, and other end is connected, by welding, to one side surface of the cover plate 40 facing the electrode assembly 30, for internal and external connections of the electrode assembly 30 to implement electrical connection of the battery cell 100.

It is understandable that during welding, under the action of a welding heat source, local parent material on a to-be-welded member will melt, and then form a liquid metal with a certain geometric shape, which is called a weld pool and is cooled to form a weld seam. Thickness at the weld seam position is slightly smaller than that of the cover plate body 41, and then the first welding region 43 and the second welding region 44 are set as different regions of the cover plate 40, thereby effectively preventing the problem of welding quality reduction caused by the connection between two weld pools, further improving the welding quality of the conductive portion 32 and the electrical connection plate 50 with the cover plate 40, and improving the electrical connection stability of the battery cell 100.

In this embodiment, the first welding region 43 and the second welding region 44 are provided to define a welding position of the conductive portion 32 and the electrical connection plate 50 respectively, thereby increasing the convenience and reliability for assembly of the battery cell 100; and moreover, the first welding region 43 and the second welding region 44 are set as different regions of the cover plate 40, thereby further effectively preventing the problem of welding quality reduction caused by the connection between the two weld pools, further improving the welding quality of the conductive portion 32 and the electrical connection plate 50 with the cover plate 40, and improving the electrical connection stability of the battery cell 100.

According to an example of the present application, as shown in FIG. 4, the first welding region 43 and the second welding region 44 are formed on both sides of a center line perpendicular to a length direction or a width direction of the cover plate 40 respectively.

That is, in some embodiments, the first welding region 43 and the second welding region 44 are formed on both sides of the center line perpendicular to the length direction of the cover plate 40 respectively; and in some other embodiments, the first welding region 43 and the second welding region 44 are formed on both sides of the center line perpendicular to the width direction of the cover plate 40 respectively.

In this embodiment, the first welding region 43 and the second welding region 44 are arranged to be formed on both sides of the center line perpendicular to the length direction or the width direction of the cover plate 40 respectively, thereby facilitating further defining positions of the first welding region 43 and the second welding region 44, and then increasing the convenience and reliability for assembly of the battery cell 100.

According to an example of the present application, a spacing between the first welding region 43 and the second welding region 44 is smaller than or equal to two thirds of width of the cover plate 40.

For example, the spacing between the first welding region 43 and the second welding region 44 may be one third of the width of the cover plate 40, or may be two thirds of the width of the cover plate 40.

In this embodiment, the spacing between the first welding region 43 and the second welding region 44 is set to be smaller than or equal to two thirds of the width of the cover plate 40, so that the spacing between the first welding region 43 and the second welding region 44 will not be too large, which is conducive to ensuring welding areas of the first welding region 43 and the second welding region 44 on the cover plate 40, so as to facilitate the connection of the conductive portion 32 and the electrical connection plate 50 with the cover plate 40, and ensure the welding quality of the conductive portion 32 and the electrical connection plate 50 with the cover plate 40, thereby improving the electrical connection stability of the battery cell 100.

According to an example of the present application, the spacing between the first welding region 43 and the second welding region 44 is larger than or equal to one third of the width of the cover plate 40.

That is, the spacing between the first welding region 43 and the second welding region 44 is larger than or equal to one third of the width of the cover plate 40, and smaller than or equal to two thirds of the width of the cover plate 40.

For example, the spacing between the first welding region 43 and the second welding region 44 is d, the width of the cover plate 40 is w, and the value range of d is [w/3, 2w/3].

In this embodiment, the spacing between the first welding region 43 and the second welding region 44 is set to be larger than or equal to one third of the width of the cover plate 40, so that the spacing between the first welding region 43 and the second welding region 44 will not be too small, thereby effectively preventing the problem of welding quality reduction caused by the connection between the two weld pools, further improving the welding quality of the conductive portion 32 and the electrical connection plate 50 with the cover plate 40, and improving the electrical connection stability of the battery cell 100.

According to an example of the present application, the spacing between the first welding region 43 and the second welding region 44 is larger than or equal to 2 mm.

For example, the spacing between the first welding region 43 and the second welding region 44 may be 2 mm, 2.5 mm, 3 mm, or more, and the spacing size may be designed based on actual conditions.

In this embodiment, the spacing between the first welding region 43 and the second welding region 44 is set to be larger than or equal to 2 mm, thereby effectively preventing the problem of welding quality reduction caused by the connection between the two weld pools, further improving the welding quality of the conductive portion 32 and the electrical connection plate 50 with the cover plate 40, and improving the electrical connection stability of the battery cell 100.

According to an example of the present application, the first welding region 43 is fitted, by welding, with the conductive portion 32 to form a first weld pool 431, the second welding region 44 is fitted, by welding, with the electrical connection plate 50 to form a second weld pool 441, and the first weld pool 431 and the second weld pool 441 are spaced apart.

The weld pool refers to a liquid metal portion with a certain geometric shape formed by a portion of a parent material that melts into a pool on a to-be-welded member during fusion welding, and is cooled to form a weld seam.

In this embodiment, the first weld pool 431 and the second weld pool 432 are spaced apart, thereby effectively solving the problem of the connection between the first weld pool 431 and the second weld pool 432, further improving the welding quality of the conductive portion 32 and the electrical connection plate 50 with the cover plate 40, and improving the electrical connection stability of the battery cell 100.

According to an example of the present application, a ratio of thickness of the cover plate 40 to thickness of the first wall 11 is 1-4.

The case 10 is mainly configured to isolate the inside of the battery cell 100 from the outside, protect the battery cell 100, and protect the use safety of the battery cell 100. Therefore, the structural strength of the case 10 must be enough to resist the expansion force of the battery cell without rupture, and the reaction force is further added to the electrode assembly 30 to function for fixing the electrode assembly 30. Therefore, the thickness of the first wall 11 must satisfy not only the strength required by the case 10, but also the requirements for lightweight of the battery cell 100.

For example, the ratio of the thickness of the cover plate 40 to the thickness of the first wall 11 may be 1, 2, 3, or 4.

In this embodiment, the ratio of the thickness of the cover plate 40 to the thickness of the first wall 11 is set to 1-4, so that the thickness of the cover plate 40 can satisfy welding requirements of the conductive portion 32 and the electrical connection plate 50, and so that the thickness of the cover plate 40 will not be too large, which is conducive to lightweight of the battery cell 100.

According to an example of the present application, the ratio of the thickness of the cover plate 40 to the thickness of the first wall 11 is 2-3.

For example, the ratio of the thickness of the cover plate 40 to the thickness of the first wall 11 may be 2, 2.5, or 3.

In this embodiment, the ratio of the thickness of the cover plate 40 to the thickness of the first wall 11 is set to 2-3, to further define the thickness of the cover plate 40, so that the thickness of the cover plate 40 will not be too large, which is conducive to lightweight of the battery cell 100; and so that the thickness of the cover plate 40 will not be too small, thereby satisfying the welding requirements of the conductive portion 32 and the electrical connection plate 50 and the structural strength requirements of the battery cell 100.

According to an example of the present application, the thickness of the cover plate 40 is larger than or equal to 1.5 mm and smaller than or equal to 5 mm.

The thickness of the cover plate 40 is associated with the welding requirements of the conductive portion 32 and the electrical connection plate 50.

For example, thickness a of the cover plate 40 may be 1.5 mm, 2 mm, 3 mm, 4 mm, or 5 mm.

In this embodiment, the thickness of the cover plate 40 is set to be larger than or equal to 1.5 mm and smaller than or equal to 5 mm, so that not only does the thickness of the cover plate 40 satisfy the welding requirements of the conductive portion 32 and the electrical connection plate 50, but also the thickness of the cover plate 40 can be controlled not to be too large, thereby reducing the occupation of the internal space of the through hole 211 by the cover plate 40 to improve the space utilization rate of the battery cell 100.

According to an example of the present application, as shown in FIG. 5, the cover plate 40 comprises a cover plate body 41 and a boss 42, the cover plate body 41 covers one end of the through hole 211, the boss 42 is arranged on one side surface of the cover plate body 41 facing the electrode assembly 30 and extends into the through hole 211, and the conductive portion 32 is connected to the boss 42.

Specifically, the cover plate body 41 is mainly configured to cover one end of the through hole 211 facing away from the electrode assembly 30 to seal the battery cell 100; the boss 42 extends into the through hole 211, and size of the boss 42 may be adapted to the through hole 211. The boss 42 may be configured to further block one side of the through hole 211 facing away from the electrode assembly 30, then further seal the through hole 211, further reduce the risk of electrolyte solution leakage from the through hole 211, and improve the reliability of the battery cell 100.

The electrical connection plate 50 is connected, by welding, to one side of the cover plate body 41 facing away from the boss 42, and the conductive portion 32 is connected, by welding, to one side of the boss 42 facing away from the cover plate body 41, thereby further reducing the occurrence of pool connection during welding, further improving the welding quality of the conductive portion 32 and the electrical connection plate 50 with the cover plate 40, and improving the electrical connection stability of the battery cell 100.

Further, the cover plate body 41 and the boss 42 may be an integrated member, or may be separate members, wherein the integrated member can reduce the production process of the cover plate 40, reduce the production steps of the cover plate 40, then improve the production rate of the cover plate 40, and reduce the production costs of the cover plate 40; and the separate members can reduce the production difficulty of the cover plate 40, and reduce the demolding costs of the cover plate 40, thereby reducing the production costs of the cover plate 40.

In this embodiment, the cover plate body 41 and the boss 42 are arranged, thereby increasing the sealing effect between the cover plate 40 and the terminal post 20, further reducing the risk of electrolyte solution leakage from the through hole 211, improving the reliability of the battery cell 100; further reducing the occurrence of pool connection during welding, further improving the welding quality of the conductive portion 32 and the electrical connection plate 50 with the cover plate 40, and improving the electrical connection stability of the battery cell 100.

According to an example of the present application, as shown in FIG. 6, height of the boss 42 protruding from the one side surface of the cover plate body 41 is 1 mm-5 mm.

For example, height c of the boss 42 protruding from the one side surface of the cover plate body 41 may be 1 mm, 2 mm, 3 mm, 4 mm, or 5 mm.

In this embodiment, the height of the boss 42 protruding from the one side surface of the cover plate body 41 is set to be 1 mm-5 mm, so that thickness of the boss 42 will not be too large, which is conductive to reducing the occupation of the internal space of the through hole 211 by the cover plate 40, thereby improving the space utilization rate of the battery cell 100; so that the thickness of the boss 42 will not be too small, and so that the thickness of the boss 42 satisfies the welding requirements of the conductive portion 32, to increase the stability of the connection between the conductive portion 32 and the boss 42.

According to an example of the present application, the height of the boss 42 protruding from the one side surface of the cover plate body 41 is 1.5 mm-3 mm.

For example, the height of the boss 42 protruding from the one side surface of the cover plate body 41 may be 1.5 mm, 2 mm, 2.5 mm, or 3 mm.

In this embodiment, the height of the boss 42 protruding from the one side surface of the cover plate body 41 is set to be 1.5 mm-3 mm, so that the thickness of the boss 42 satisfies the welding requirements of the conductive portion 32, thereby further reducing the occupation of the internal space of the through hole 211 by the cover plate 40, and further improving the space utilization rate of the battery cell 100.

According to an example of the present application, the boss 42 is clearance fitted with the one end of the through hole 211, and a fit clearance between the boss 42 and the through hole 211 is 0-0.1 mm.

Specifically, the clearance fit refers to fitting with a clearance, that is, when the boss 42 is fitted with the through hole 211, a clearance is formed between an outer wall of the boss 42 and an inner wall of the through hole 211. A smallest clearance may be zero.

For example, the fit clearance between the boss 42 and the through hole 211 may be 0 mm, 0.01 mm, 0.02 mm, 0.04 mm, 0.06 mm, 0.08 mm, or 0.1 mm.

In this embodiment, the boss 42 is arranged to be clearance fitted with the one end of the through hole 211, and the fit clearance between the boss 42 and the through hole 211 is 0-0.1 mm, which is conducive to the boss 42 entering and exiting the through hole 211, thereby reducing the difficulty in assembly of the cover plate 40 and the terminal post 20.

According to an example of the present application, the fit clearance between the boss 42 and the through hole 211 is smaller than or equal to 0.05 mm.

For example, the fit clearance between the boss 42 and the through hole 211 may be 0 mm, 0.01 mm, 0.02 mm, 0.03 mm, 0.04 mm, or 0.05 mm.

In this embodiment, the fit clearance between the boss 42 and the through hole 211 is set to be smaller than or equal to 0.05 mm, thereby further reducing the clearance between the boss 42 and inner wall of the through hole 211, further improving the blocking effect of the boss 42 on the through hole 211, reducing the risk of electrolyte solution leakage from the cover plate 40, and improving the reliability of the battery cell 100.

According to an example of the present application, the terminal post 20 is a negative electrode terminal post, the cover plate body 41 and the boss 42 are separate members, material of the cover plate body 41 is different from material of the boss 42, the material of the boss 42 is same as material of the conductive portion 32, and when the boss is 42 welded to the conductive portion 32, pool depth on the cover plate 40 is smaller than the thickness of the boss 42.

Specifically, the negative electrode terminal post is connected to the negative electrode active material-coated portion through the negative electrode conductive portion, the material of the conductive portion 32 is same as material of a current collector of the active material-coated portion 31, the boss 42 is connected, by welding, to the conductive portion 32, and further, the material of the boss 42 is same as material of the negative electrode current collector. The cover plate body 41 is connected, by welding, to the electrical connection plate 50, and then the material of the cover plate body 41 may be same as material of the electrical connection plate 50.

For example, in some specific embodiments, the material of the negative electrode current collector is copper, that is, the material of the conductive portion 32 is copper, and the material of the electrical connection plate 50 is generally aluminum. Therefore, copper may be used as the material of the boss 42, and aluminum may be used as the material of the cover plate body 41. Same materials are welded to each other, thereby reducing the welding difficulty, and improving the welding quality. Therefore, materials of the conductive portion 32, the negative electrode current collector, and the boss 42 are same, thereby reducing the welding difficulty of the conductive portion 32 with the negative electrode current collector and the conductive portion 32 with the boss 42, and improving the welding quality of the conductive portion 32 with the negative electrode current collector and the conductive portion 32 with the boss 42; and materials of the cover plate body 41 and the electrical connection plate 50 are same, thereby reducing the welding difficulty of the electrical connection plate 50 with the cover plate body 41, and improving the welding quality of the electrical connection plate 50 with the cover plate body 41.

In this embodiment, when the terminal post 20 is the negative electrode terminal post, the cover plate body 41 and the boss 42 are set as separate members, and the material of the boss 42 is same as the material of the conductive portion 32, so that the material of the boss 42 is adapted to the material of the conductive portion 32, thereby increasing the welding quality of the boss 42 and the conductive portion 32, and increasing the stability of the connection between the boss 42 and the conductive portion 32; and in addition, when the boss 42 is welded to the conductive portion 32, the pool depth on the cover plate 40 is smaller than the thickness of the boss 42, and the welding position is controlled between same materials, thereby further increasing the welding quality of the boss 42 and the conductive portion 32, and reducing the welding difficulty of the boss 42 and the conductive portion 32.

According to an example of the present application, the terminal post 20 is a positive electrode terminal post, the boss 42 is integrally formed with the cover plate body 41, and when the cover plate 40 is welded to the conductive portion 32, pool depth on the boss 42 is larger than the thickness of the boss 42.

Specifically, the positive electrode terminal post is connected to the positive electrode active material-coated portion through the positive electrode conductive portion, the material of the conductive portion 32 is same as material of a current collector of the active material-coated portion 31, and further, the material of the boss 42 is same as material of the positive electrode current collector.

For example, in some specific embodiments, the material of the positive electrode current collector is aluminum, that is, aluminum may be used as the material of the conductive portion 32 and the material of the boss 42, the material of the electrical connection plate 50 is generally aluminum, and aluminum may be used as the material of the cover plate body 41. Therefore, the material of the cover plate body 41 is same as the material of the boss 42.

In this embodiment, when the terminal post 20 is the positive electrode terminal post, the boss 42 is arranged to be integrally formed with the cover plate body 41, so that the cover plate 40 satisfies the requirements for welding with the electrical connection plate 50 and the conductive portion 32, thereby further reducing the production process of the cover plate 40, reducing the production steps of the cover plate 40, further increasing the production rate of the cover plate 40, and reducing the production costs of the cover plate 40.

According to an example of the present application, the terminal post 20 is connected, by welding, to the cover plate 40.

Welding by the welded connection can connect two objects of different sizes and different materials with simple operations and without an additional external material, thereby simplifying the connection process of the cover plate 40 and the terminal post 20, and reducing the production costs and overall weight of the battery cell 100; and moreover, the welded connection has high strength and good airtightness, thereby increasing the stability and airtightness of the connection between the cover plate 40 and the terminal post 20, and improving the airtightness of the battery cell 100.

In this embodiment, the terminal post 20 is arranged to be connected, by welding, to the cover plate 40, thereby increasing the stability and airtightness of the connection between the terminal post 20 and the cover plate 40, further improving airtight seal of the battery cell 100, and improving the reliability of the battery cell 100.

According to an example of the present application, as shown in FIGS. 7-11, the terminal post 20 is a hollow annular shape and defines the through hole 211 inside.

Specifically, the terminal post 20 is a hollow annular shape, that is, the inside of the terminal post 20 is formed into a large hollow structure, and a cross section of the terminal post 20 is formed into an annular shape, wherein the annular shape may include a plurality of types, such as a rectangular ring, a circular ring, or a prismatic ring.

In this embodiment, the terminal post 20 is arranged to be a hollow annular shape and defines the through hole 211 on the inner side, thereby reducing the weight of the terminal post 20 to a certain extent, and further improving the gravimetric energy densities of the battery cell 100 and the battery 1000; and moreover, internal cavity of the hollow annular shape has a large volume, so that the conductive portion 32 can very easily extend out of the through hole 211, thereby reducing the welding difficulty of the conductive portion 32 and the cover plate 40, reducing the difficulty in assembly of the battery cell 100, and improving the assembly rate of the battery cell 100.

According to an example of the present application, as shown in FIGS. 7-11, the terminal post 20 comprises: a terminal post body 21, a first ring 22, and a second ring 23, wherein the terminal post body 21 is annular and defines the through hole 211 inside; the first ring 22 is connected to one end of the terminal post body 21 facing the electrode assembly 30, the first ring 22 extends outward along a radial direction of the terminal post body 21 and extends along a circumferential direction of the terminal post body 21 to form an annular shape; the second ring 23 is connected to other end of the terminal post body 21 facing away from the electrode assembly 30, and the second ring 23 extends outward along the radial direction of the terminal post body 21 and extends along the circumferential direction of the terminal post body 21 to form an annular shape.

The terminal post body 21 is formed into an annular shape, for example, a cross section of the terminal post body 21 may be formed into an annular structure, such as a circular ring, a rectangular ring, or a rhombus ring.

One side surface of the first ring 22 facing the electrode assembly 30 may be arranged to be flush with one side surface of the terminal post body 21 facing the electrode assembly 30, shape of the first ring 22 may be fitted with shape of the terminal post body 21, the first ring 22 and the terminal post body 21 may be separately provided, or may be integrally formed, material of the first ring 22 may be same as or different from material of the terminal post body 21, thickness of the first ring 22 in an axial direction of the terminal post body 21 may be reasonably set based on the requirements for installation and assembly of the terminal post 20, and optionally, the first ring 22 may be formed by outward flanging one end of the terminal post body 21 facing the electrode assembly 30 along the radial direction of the terminal post body 21.

One side surface of the second ring 23 facing the electrode assembly 30 may be arranged to be flush with one side surface of the terminal post body 21 facing away from the electrode assembly 30, shape of the second ring 23 may be fitted with shape of the terminal post body 21, the second ring 23 and the terminal post body 21 may be separately provided, or may be integrally formed, material of the second ring 23 may be same as or different from the material of the terminal post body 21, thickness of the second ring 23 in the axial direction of the terminal post body 21 may be reasonably set based on the requirements for installation and assembly of the terminal post 20, and optionally, the second ring 23 may be formed by outward flanging one end of the terminal post body 21 facing away from the electrode assembly 30 along the radial direction of the terminal post body 21.

In this embodiment, the first ring 22 and the second ring 23 are arranged at both ends of the terminal post body 21 respectively, and the first ring 22 and the second ring 23 can improve the structural strength of the terminal post body 21 to a certain extent, so that the terminal post 20 has better overall structural strength, the terminal post 20 can be more stably and reliably connected and fixed with a tab, and the terminal post 20 can be better involved in power transmission operation of the battery cell 100. The first ring 22 and the second ring 23 can be fitted with the terminal post body 21 to form a clamping groove structure, so as to facilitate the installation and fixation of the terminal post 20 in the battery cell 100. The first ring 22 and the second ring 23 are simple in structure and easy to use.

According to an example of the present application, as shown in FIG. 11, a groove 212 is formed on one side surface of the terminal post 20 facing away from the electrode assembly 30, the through hole 211 is formed inside of the groove 212 and runs throughout a bottom wall of the groove 212, and the cover plate 40 is arranged in the groove 212.

Specifically, shape of the groove 212 may be adapted to shape structure of the cover plate 40, and depth of the groove 212 may be adapted to the thickness of the cover plate 40. Axis of the groove 212 may be colinear with axis of the through hole 211. When the cover plate 40 is assembled with the terminal post 20, one side surface of the cover plate 40 facing the electrode assembly 30 abuts against groove bottom of the groove 212, and a peripheral edge of the cover plate 40 abuts against a groove wall of the groove 212.

The groove 212 is connected to the through hole 211, the through hole 211 runs throughout the bottom wall of the groove 212, and diameter of the through hole 211 is smaller in size than diameter of the groove 212. One side of the cover plate 40 facing the electrode assembly 30 abuts against the bottom wall of the groove 212, to cover the through hole 211, so as to seal the battery cell 100, thereby effectively preventing the electrolyte solution leakage from the through hole 211, and improving the reliability of the battery cell 100.

In this embodiment, the groove 212 is formed on the one side surface of the terminal post 20 facing away from the electrode assembly 30, so that the cover plate 40 and the terminal post 20 can be conveniently positioned during fixation, and the connection and fixation are stable and reliable.

According to an example of the present application, as shown in FIG. 11, a side wall of the groove 212 obliquely extends outward along a radial direction of the through hole 211 in a direction from the electrode assembly 30 towards the cover plate 40.

Specifically, the side wall of the groove 212 extends outward along a radial direction of a connecting hole, and inclination angle of the side wall can be reasonably set based on the requirements for installation and fixation of the cover plate 40. Extension direction of the side wall of the groove 212 can be adapted to extension direction of the peripheral edge of the cover plate 40, and the side wall of the groove 212 can abut against a peripheral wall of the cover plate 40.

For example, as shown in FIG. 11, a longitudinal section of the groove 212 can be formed into a trapezoid that is wide at the top and narrow at the bottom, and the side wall of the groove 212 is formed into a slope that is inclined outward, thereby functioning to guide the assembly of the cover plate 40 when the cover plate 40 is assembled with the terminal post 20, so that the cover plate 40 can smoothly enter the groove 212. Moreover, the inclined slope has a relatively larger area than a perpendicular plane, thereby increasing the contact area between the cover plate 40 and the terminal post 20, increasing the welding width during welding, and further improving the sealing effect between the cover plate 40 and the terminal post 20.

In this embodiment, the side wall of the groove 212 is arranged to obliquely extend outward along the radial direction of the through hole 211, thereby functioning to guide assembly of the cover plate 40 and the terminal post 20 to a certain extent, so that the cover plate 40 can be conveniently fixed in the groove 212 with a simple structure and easy assembly. Moreover, when the cover plate 40 is connected, by welding, to the terminal post 20, a peripheral edge of the cover plate 40 and an oblique side wall of the groove 212 can further increase the welding width during welding, so that the cover plate 40 and the terminal post 20 have high welding quality, thereby increasing the sealing effect of welding between the cover plate 40 and the terminal post 20, and increasing the airtightness of the battery cell 100.

According to an example of the present application, one side surface of the cover plate 40 facing away from the electrode assembly 30 is flush with one end surface of one end of the terminal post 20 facing away from the electrode assembly 30.

It is understandable that after the cover plate 40 is assembled with the terminal post 20, the cover plate 40 can be fitted with the terminal post 20 on one side of the terminal post 20 facing away from the electrode assembly 30 to form a continuous plane. Specifically, one side surface of the second ring 23 facing away from the electrode assembly 30 may be flush with the one side surface of the terminal post 20 facing away from the electrode assembly 30 and the one side surface of the cover plate 40 facing away from the electrode assembly 30.

For example, as shown in FIGS. 4-5, one upper side surface of the cover plate 40 is flush with one upper side surface of the second ring 23 of the terminal post 20.

In this embodiment, the one side surface of the cover plate 40 facing away from the electrode assembly 30 is arranged to be flush with the one end surface of the one end of the terminal post 20 facing away from the electrode assembly 30, so that the cover plate 40 can be fitted with the terminal post 20 to form a continuous plane, thereby reducing the space occupation by the cover plate 40 to a certain extent and increasing the electrical connection surface of the terminal post 20 of the battery cell 100, improving the energy density of the battery cell 100 to a certain extent, conveniently electrically connecting the battery cell 100 to an electrical connecting element through the one end of the terminal post 20 facing away from the electrode assembly 30; and further improving beauty of the appearance of the battery cell 100.

According to an example of the present application, the active material-coated portion 31 comprises a current collector and an active material layer arranged on the current collector, the conductive portion 32 comprises a tab portion 321 electrically connected to the current collector, the tab portion 321 comprises a plurality of tab plates, the plurality of tab plates converge at a position close to the current collector to form a first converged portion 3211, the plurality of tab plates converge at a position away from the current collector and are connected to form a second converged portion 3212, the first converged portion 3211 connects the second converged portion 3212 and the active material-coated portion 31, and at least a portion of the second converged portion 3212 is accommodated in the through hole 211.

Specifically, the current collector is a component configured to carry an active material, and collect and output a current generated by the active material of the battery. The current collector comprises a positive electrode current collector and a negative electrode current collector, and material of the positive electrode current collector is different from material of the negative electrode current collector. For example, taking a lithium-ion battery as an example, the material of the positive electrode current collector may be aluminum, and the material of the negative electrode current collector may be copper.

The active material layer is mainly coated on the current collector, and the active material layer comprises a positive electrode active material layer and a negative electrode active material layer, wherein the positive electrode active material layer and the negative electrode active material have different functions, and then the material of the positive electrode active material layer is also different from the material of the negative electrode active material. For example, taking the lithium-ion battery as an example, the positive electrode active material may be, e.g., lithium cobalt oxide, lithium iron phosphate, ternary lithium, or lithium manganate, and the negative electrode active material may be, e.g., carbon or silicon.

The tab portion 321 is a contact point when the battery cell 100 is charged and discharged. The tab portion 321 comprises a plurality of tab plates. For example, the number of tab plates may be two, three, four, or more. Each of the tab plates is a structure that is electrically connected to the current collector but is not coated with the active material, and may be formed by direct die-cutting of the current collector.

In the above technical solutions, when forming the first converged portion 3211, the plurality of tab plates only converge (that is, gather in a direction of approaching each other) and gather, but are not connected, while when forming the second converged portion 3212, the plurality of tab plates not only converge and gather, but also are connected into an integrated structure. For example, the plurality of tab plates may be connected into an integrated plate structure by welding (such as ultrasonic welding) to form the second converged portion 3212. For example, the plurality of tab plates may also converge and be connected to form the second converged portion 3212 by means of, e.g., conductive adhesive bonding, which will not be repeated here.

It should be noted that in an embodiment of the present application, the tab plates are classified as tab plates of a positive electrode and tab plates of a negative electrode. To-be-converged tab plates of the positive electrode are stacked together and ultrasonically pre-welded to form the second converged portion 3212 of the positive electrode, thereby reducing interlayer gap, so that a plurality of fluffy positive tab plates form a plate structure with certain rigidity. Similarly, the tab plates are classified as tab plates of the positive electrode and tab plates of the negative electrode. To-be-converged tab plates of the positive electrode are stacked together and ultrasonically pre-welded to form the second converged portion 3212 of the positive electrode, thereby reducing the interlayer gap, so that the plurality of fluffy positive tab plates form the plate structure with certain rigidity.

In the above technical solutions, "the plurality of tab plates converge at the position close to the current collector to form the first converged portion 3211, the plurality of tab plates converge at the position away from the current collector and are connected to form the second converged portion 3212" is intended to show that: along extension direction of the tab plates, the first converged portion 3211 and the second converged portion 3212 are sequentially arranged along a direction away from the current collector, and specific positions of the first converged portion 3211 and the second converged portion 3212 are not limited, that is, how close the first converged portion 3211 is to the current collector is not required, nor is how far the second converged portion 3212 is from the current collector required. In some optional examples, the current collector and the tab plates may be an integrated member, for example, the positive electrode plate may be an integrally formed aluminum foil, and for another example, the negative electrode plate may be an integrally formed copper foil, etc.

In this embodiment, the plurality of tab plates are arranged to converge and be connected to form the second converged portion 3212, so that the second converged portion 3212 can have small size and thickness, thereby making it easier for the tab portion 321 to extend into the through hole 211 for connection to the cover plate 40, further increasing the convenience of connection between the conductive portion 32 and the cover plate 40, further effectively reducing the risk of occurrence of short circuit between the tab plates and the active material-coated portion 31 below the tab portion 321 due to inverted insertion of the tab plates caused by branching of the plurality of tab plates, and improving the reliability of the battery cell 100. In addition, at least a portion of the second converged portion 3212 is arranged to be accommodated in the through hole 211, thereby further making full use of the space of the terminal post 20, and improving the volumetric energy density of the battery cell 100.

According to an example of the present application, as shown in FIG. 14, the conductive portion 32 is fixedly connected to the cover plate 40 through the second converged portion 3212.

In this embodiment, the conductive portion 32 is arranged to be fixedly connected to the cover plate 40 through the second converged portion 3212, thereby simplifying the structure of the battery cell 100, reducing the use of parts, simplifying the assembly process, and improving the assembly efficiency.

According to an example of the present application, at least a portion of the first converged portion 3211 is accommodated in the through hole 211.

That is, at least a portion of the first converged portion 3211 and at least a portion of the second converged portion 3212 are both accommodated in the through hole 211.

In this embodiment, at least a portion of the first converged portion 3211 is arranged to be accommodated in the through hole 211, thereby making fuller use of the space in the terminal post 20, further reducing the space occupied by the tab portion 321 in the case 10 to accommodate the active material-coated portion 31 of a larger size, improving the volumetric energy density of the battery cell 100, further better reducing the redundancy of the tab portion 321 in the case 10, and further reducing the probability of short circuit between the tab portion 321 and the active material-coated portion 31.

According to an example of the present application, the active material-coated portion 31 comprises a current collector and an active material layer arranged on the current collector, the conductive portion 32 comprises a tab portion 321 electrically connected to the current collector, the tab portion 321 comprises a plurality of tab plates, the plurality of tab plates converge at a position close to the current collector to form a first converged portion 3211, the plurality of tab plates converge at a position away from the current collector and are connected to form a second converged portion 3212, the first converged portion 3211 connects the second converged portion 3212 and the active material-coated portion 31; the conductive portion 32 further comprises an adapter plate connected to the second converged portion 3212, the conductive portion 32 is electrically connected to the cover plate 40 through the adapter plate, and at least a portion of the adapter plate is accommodated in the through hole 211.

Specifically, the active material-coated portion 31 may be electrically connected to the cover plate 40 through the first converged portion 3211, the second converged portion 3212, and the adapter plate sequentially, and the position where the conductive portion 32 is electrically connected to the cover plate 40 is located on the adapter plate, for example, the electrical connection may be implemented by welding (for example, laser-welding) with the cover plate 40 through the adapter plate. In addition, the adapter plate and the tab plate are two separate components, and are connected by, e.g., welding (for example, ultrasonic welding).

It is understandable that in this example, at least a portion of the second converged portion 3212 is also accommodated in the through hole 211, and at least a portion of the first converged portion 3211 may also be accommodated in the through hole 211, or may not be accommodated in the through hole 211.

In this embodiment, the adapter plate is arranged to accommodate at least a portion of the second converged portion 3212 and at least a portion of the adapter plate in the through hole 211, thereby making fuller use of the space in the terminal post 20, and further reducing the space occupied by the conductive portion 32 in the case 10, to improve the volumetric energy density of the battery cell 100. Moreover, the adapter plate can be further used to avoid position of the second converged portion 3212 for welding to the terminal post 20, so that the welding of the adapter plate with the terminal post 20 is more reliable with a small risk of weld crack, and the reliability and stability of the battery cell 100 can be further improved; and the terminal post 20 is electrically connected the tab plates through the adapter plate, which can also simplify the structure of the tab plates.

According to an example of the present application, at least a portion of the second converged portion 3212 is located in the through hole 211; or the second converged portion 3212 is entirely located in the through hole 211, and at least a portion of the first converged portion 3211 is located in the through hole 211.

It is understandable that in some specific embodiments of the present application, the second converged portion 3212 may be partially located in the through hole 211, or may be entirely located in the through hole 211, and the first converged portion 3211 may be at least partially located in the through hole 211, or may not be located in the through hole 211.

In some other specific embodiments of the present application, the second converged portion 3212 is entirely located in the through hole 211, and at least a portion of the first converged portion 3211 is located in the through hole 211. At least a portion of the first converged portion 3211 is located in the through hole 211, that is, the first converged portion 3211 may be partially located in the through hole 211, or may be entirely located in the through hole 211.

In this embodiment, at least a portion of the second converged portion 3212 is arranged to be located in the through hole 211, thereby making full use of the space in the terminal post 20, and further reducing the space occupied by the tab portion 321 in the case 10 to improve the volumetric energy density of the battery cell 100; the second converged portion 3212 is arranged to be entirely located in the through hole 211, and at least a portion of the first converged portion 3211 is arranged to be located in the through hole 211, thereby making fuller use of the space in the terminal post 20, substantially reducing the space occupied by the tab portion 321 in the case 10, further substantially improving the volumetric energy density of the battery cell 100; further reducing the redundancy of the tab portion 321 in the case 10, and further reducing the probability of short circuit between the tab portion 321 and the active material-coated portion 31.

According to an example of the present application, the second converged portion 3212 extends along a surface of the cover plate 40, one end of the first converged portion 3211 is connected to the active material-coated portion 31 in a direction from the electrode assembly 30 towards the cover plate 40, and other end of the first converged portion 3211 obliquely extends towards a peripheral wall of the through hole 211 and extends to connect to one end of the second converged portion 3212.

Specifically, in the direction from the electrode assembly 30 towards the cover plate 40, the first converged portion 3211 and the second converged portion 3212 are arranged sequentially, and the active material-coated portion, the first converged portion 3211, and the second converged portion 3212 are connected sequentially. When the cover plate 40 is fixedly connected to the terminal post 20, the second converged portion 3212 extends along the surface of the cover plate 40, and one end of the first converged portion 3211 facing away from the active material-coated portion 31 obliquely extends towards the peripheral wall of the through hole 211, that is, the tab portion 321 is formed into a "Z" shape in the through hole 211, thereby reducing the space occupied by the tab portion 321.

In this embodiment, the second converged portion 3212 is arranged to extend along the surface of the cover plate 40, the one end of the first converged portion 3211 is arranged to be connected to the active material-coated portion 31 in the direction from the electrode assembly 30 towards the cover plate 40, and other end of the first converged portion 3211 is arranged to obliquely extend towards the peripheral wall of the through hole 211 and extend to connect to the one end of the second converged portion 3212, thereby increasing the length of the first converged portion 3211 accommodated inside the through hole 211, further effectively reducing the space occupancy of the tab inside the battery cell 100, accommodating the active material-coated portion 31 of a larger size, improving the volumetric energy density of the battery cell 100, better reducing the redundancy of the tab portion 321 in the case 10, further reducing the probability of short circuit between the tab portion 321 and the active material-coated portion 31, and increasing the stability of the battery cell 100.

According to a method for preparing a battery cell 100 in the second aspect of the present application, the preparation method comprises: passing one end of a conductive portion 32 through a through hole 211 of a terminal post 20, and then extending out of other side of the terminal post 20; connecting, by welding, the one end of the conductive portion 32 to a cover plate 40 on the other side of the terminal post 20; covering the cover plate 40 on one end of the through hole 211, and accommodating the conductive portion 32 in the through hole 211; and fixedly connecting the cover plate 40 to the terminal post 20.

The one end of the conductive portion 32 refers to one end facing away from an active material-coated portion 31, and may also be understood as one end of a second converged portion 3212 or an adapter plate; the other side of the terminal post 20 refers to one side of a second ring 23 of the terminal post 20 facing away from the active material-coated portion 31; and the one end of the through hole 211 refers to one end of the through hole 211 facing away from the active material-coated portion 31.

In this embodiment, the one end of the conductive portion 32 may run throughout the through hole 211 of the terminal post 20 in many ways. For example, an electrode assembly 30 may be laid flat, and then the electrode assembly 30 may be pushed using a cylinder to move towards the terminal post 20, so that the conductive portion 32 runs throughout the through hole 211 and extends out of the battery cell 100 from one side of the terminal post 20 facing away from the active material-coated portion 31; or a case 10 may be pushed to move towards the electrode assembly 30, so that the conductive portion 32 passes through the through hole 211 and extends out of the battery cell 100 from the one side of the terminal post 20 facing away from the active material-coated portion 31.

During preparation of the battery cell 100, one end of the conductive portion 32 facing away from the active material-coated portion 31 may be pushed to move towards the terminal post 20, so that the one end of the conductive portion 32 facing away from the active material-coated portion 31 extends out of the battery cell 100 on the one side of the terminal post 20 facing away from the active material-coated portion 31, and the extended portion of the conductive portion 32 is welded to the cover plate 40 on the outside of the battery cell 100, thereby reducing the damage to the battery cell 100 caused by welding slag falling inside the battery cell 100 during welding; and then, the cover plate 40 and the terminal post 20 are assembled, so that the cover plate 40 covers the one end of the through hole 211 facing away from the active material-coated portion 31, the tab is bent and accommodated in the through hole 211, and then the cover plate 40 is connected, by welding, to the terminal post 20 to seal the battery cell 100.

According to the method for preparing a battery cell 100 of the present application, the cover plate 40 can be connected, by welding, to the conductive portion 32 on the outside of the battery cell 100, thereby reducing the damage to the battery cell 100 caused by welding slag falling inside the battery cell 100 during welding, further improving the reliability of the battery cell 100; accommodating the conductive portion 32 in the through hole 211, and reducing the space occupied by the conductive portion 32 inside the case 10, so that the case 10 can accommodate the active material-coated portion 31 of a larger volume, further improving the energy density of the battery cell 100; additionally further reducing the redundancy of the conductive portion 32, further reducing the probability of short circuit between the conductive portion 32 and the active material-coated portion 31, and increasing the stability of the battery cell 100.

In some specific embodiments of the present application, before passing one end of a tab portion 321 through the through hole 211 of the terminal post 20 and then extending out of the other side of the terminal post 20, the preparation method further comprises: connecting a plurality of tab plates of the tab portion 321 by pre-welding into an integrated member.

The plurality of tab plates are stacked to form a tab, and the plurality of tab plates may be connected into the integrated member by ultrasonic pre-welding to form one end of the tab.

In this embodiment, the plurality of tab plates of the tab portion 321 are connected into the integrated member by pre-welding, thereby reducing gaps among the tab plates, making one end of the tab portion 321 more compact, and facilitating subsequent extension of the tab portion 321 into the through hole 211 for operation.

According to an example of the present application, the connecting, by welding, the one end of the conductive portion 32 to the cover plate 40 on the other side of the terminal post 20 comprises: press-fitting other end of the conductive portion 32 onto one side surface of the cover plate 40; and laser-welding the other end of the conductive portion 32 to the cover plate 40.

It is understandable that when the one end of the conductive portion 32 facing away from the active material-coated portion 31 extends out of the through hole 211, the extended one end of the conductive portion 32 is first press-fitted with the boss 42 of the cover plate 40 to ensure the welding gap, and then the conductive portion 32 is laser-welded to the cover plate 40 by laser.

The laser-welding is an efficient and precise welding method capable of implementing noncontact welding using a high-energy-density laser beam as a heat source, and laser-welding has the advantages such as high precision, fast speed, and small deformation. Then, the conductive portion 32 is laser-welded to the cover plate 40, thereby improving the connection speed of the conductive portion 32 and the cover plate 40, and increasing the welding quality of the conductive portion 32 and the cover plate 40.

In this embodiment, the other end of the conductive portion 32 is press-fitted onto the one side surface of the cover plate 40, thereby ensuring the welding gap to implement laser-welding, and improving the welding quality; and the conductive portion 32 is laser-welded to the cover plate 40, thereby increasing the connection speed of the conductive portion 32 and the cover plate 40, and improving the welding quality of the conductive portion 32 and the cover plate 40.

In some specific embodiments of the present application, the fixedly connecting the cover plate 40 to the terminal post 20 comprises: connecting, by welding, the cover plate 40 to the terminal post 20.

It is understandable that after the conductive portion 32 is laser-welded to the cover plate 40, the cover plate 40 and the terminal post 20 are assembled, the cover plate 40 may be assembled into the groove 212 on one side of the terminal post 20 facing away from the electrode assembly 30, and then the cover plate 40 is connected, by welding, to the terminal post 20 to cover the one end of the through hole 211 facing away from the active material-coated portion 31, and finally complete the assembly of the battery cell 100.

In this embodiment, the cover plate 40 is connected, by welding, to the terminal post 20, thereby increasing the stability of the connection between the cover plate 40 and the terminal post 20, further increasing the airtightness of the battery cell 100, and improving the reliability of the battery cell 100.

A battery 1000 according to an embodiment in the third aspect of the present application comprises the battery cell 100 according to an embodiment in the first aspect of the present application.

In some specific embodiments of the present application, as shown in FIG. 2, the battery 1000 may further comprise: a main box part 201 and an end cover 202, wherein the main box part 201 has a cavity with an open top, a plurality of battery cells 100 are arranged in the cavity, and the end cover 202 covers the top of the main box part 201 through a fastener.

Optionally, the plurality of battery cells 100 may be stacked in the cavity along a thickness direction of the battery cells 100.

Optionally, the main box part 201 is formed in a cuboid box shape, an inner side of the main box part 201 defines the cavity, top of the cavity is open, a plurality of first fixing holes are provided on the main box part 201, the end cover 202 is formed in a horizontally arranged flat plate shape, a plurality of second fixing holes throughout the end cover 202 in an up-down direction are provided on the end cover 202, there is one-to-one correspondence and up-down opposition between the plurality of first fixing holes and the plurality of second fixing holes, the battery 1000 further comprises a plurality of fasteners, and the plurality of fasteners pass through the first fixing holes and the second fixing holes to fasten the end cover 202 to an upper side of the main box part 201.

Optionally, the end cover 202 may be a carbon steel plate, an aluminum plate, or a composite material plate.

In this embodiment, the box 200 is arranged as a main box part 201 and an end cover 202 that are arranged separately, thereby contributing to installing the battery cell 100 in the box 200. The main box part 201 is connected to the end cover 202 through a fastener to implement detachable connection, which is convenient for maintenance and replacement, and can ensure the connection strength between the main box part 201 and the end cover 202, and ensure the overall structural strength of the battery 1000.

In some specific embodiments of the present application, a first adhesive layer is provided on a bottom wall of the cavity, and bottoms of the plurality of battery cells 100 are connected to a bottom wall of the main box part 201 through the first adhesive layer; and/or, a second adhesive layer is provided on the end cover 202, and tops of the plurality of battery cells 100 are connected to the end cover 202 through the second adhesive layer.

The battery 1000 may only comprise the first adhesive layer, or only comprise the second adhesive layer, or may comprise both the first adhesive layer and the second adhesive layer. The first adhesive layer is configured to adhesively connect the bottom wall of the main box part 201 and the battery cell 100, and the second adhesive layer is configured to adhesively connect the end cover 202 and the battery cell 100, so as to reliably fix the plurality of battery cells 100 in the box 200, improve the reliability and stability of the connection between the battery cell 100 and the box 200, and effectively prevent the battery cells 100 from shaking in the box 200.

In this embodiment, the first adhesive layer and the second adhesive layer are provided, the bottoms of the battery cells 100 are adhesively fixed to the bottom wall of the main box part 201 through the first adhesive layer, and the tops of the battery cells 100 are adhesively fixed to the end cover 202 through the second adhesive layer, thereby improving the overall strength of the battery 1000, and ensuring the connection stability of the battery cells 100.

The battery 1000 according to an embodiment of the present application is provided with the battery cell 100 in an embodiment of the above first aspect, thereby improving the overall performance of the battery 1000.

An electrical device according to an embodiment in the fourth aspect of the present application comprises the battery 1000 according to an embodiment in the third aspect of the present application, wherein the battery 1000 is configured to provide electrical energy.

The electrical apparatus may be any one of the above devices or systems using the battery 1000.

The electrical device according to an embodiment of the present application is provided with the battery 1000 in an embodiment of the above third aspect, thereby improving the overall performance of the electrical device.

The battery cell 100 according to a specific embodiment of the present application is described below with reference to FIGS. 3-14.

Referring to FIG. 3, the battery cell 100 comprises a case 10, a terminal post 20, a cover plate 40, and an electrode assembly 30. The case 10 comprises a first wall 11 and an accommodating cavity. The terminal post 20 is arranged on the first wall 11 and has a through hole 211. The cover plate 40 is arranged on one side of the terminal post 20 facing away from the electrode assembly 30 and is connected, by welding, to the terminal post 20 to cover one end of the through hole 211 facing away from the electrode assembly 30. The electrode assembly 30 is arranged in the accommodating cavity. The electrode assembly 30 comprises an active material-coated portion 31 and a conductive portion 32, and is a core component of the battery cell 100.

Specifically, the active material-coated portion 31 is an electrode plate of the electrode assembly 30, and the conductive portion 32 is a tab of the electrode assembly 30. The electrode plate comprises a positive electrode plate and a negative electrode plate, the electrode plate comprises a current collector and an active material layer arranged on the current collector, the tab comprises a plurality of tab plates, the plurality of tab plates converge at a position close to the current collector to form a first converged portion 3211, the plurality of tab plates converge at a position away from the current collector and are connected to form a second converged portion 3212, the first converged portion 3211 connects the second converged portion 3212 and the active material-coated portion 31, and at least a portion of the second converged portion 3212 is accommodated in the through hole 211, and is connected, by welding, to the cover plate 40.

The second converged portion 3212 extends along a surface of the cover plate 40, one end of the first converged portion 3211 is connected to the active material-coated portion 31 in a direction from the electrode assembly 30 towards the cover plate 40, and other end of the first converged portion 3211 obliquely extends towards a peripheral wall of the through hole 211 and extends to connect to one end of the second converged portion 3212 to form a "Z" shape.

The cover plate 40 comprises a cover plate body 41 and a boss 42. The cover plate body 41 is configured to cover one end of the through hole 211. The boss 42 is arranged on one side surface of the cover plate body 41 facing the electrode assembly 30 and extends into the through hole 211. The boss 42 is clearance fitted with the through hole 211, and the conductive portion 32 is connected to one side surface of the boss 42 facing the electrode assembly 30. An electrical connection plate 50 is connected to one side surface of the cover plate body 41 facing away from the electrode assembly 30.

The cover plate 40 further has a first welding region 43 and a second welding region 44, the first welding region 43 and the second welding region 44 are formed on both sides of a center line perpendicular to a length direction of the cover plate 40 respectively. The first welding region 43 is connected to the conductive portion 32, and the second welding region 44 is connected to the electrical connection plate 50. The first welding region 43 and the second welding region 44 are indirectly arranged, and a spacing between the first welding region 43 and the second welding region 44 is larger than or equal to 2 mm.

In addition, thickness of the cover plate 40 is larger than or equal to 1.5 mm and smaller than or equal to 5 mm, height of the boss 42 protruding from one side surface of the cover plate body 41 is 1.5 mm-3 mm, and a fit clearance between the boss 42 and the through hole 211 is smaller than or equal to 0.05 mm.

The terminal post 20 comprises a terminal post body 21, a first ring 22, and a second ring 23, wherein the terminal post body 21 is annular and defines a through hole 211 inside; the first ring 22 is integrally formed with the terminal post body 21 and is located in the accommodating cavity, the first ring 22 is annularly arranged on an outer peripheral surface of the terminal post body 21, one side surface of the first ring 22 facing the electrode assembly 30 is flush with one side surface of the terminal post body 21 facing the electrode assembly 30 and other side abuts against an inner wall of the case 10, the second ring 23 is integrally formed with the terminal post body 21 and is located outside the case 10, the second ring 23 is annularly arranged on an outer peripheral surface of the terminal post body 21, one side surface of the second ring 23 facing away from the electrode assembly 30 is flush with one side surface of the terminal post body 21 facing away from the electrode assembly 30 and other side abuts against the case 10.

A groove 212 is formed on one side surface of the terminal post 20 facing away from the electrode assembly 30, and a side wall of the groove 212 obliquely extends outward along a radial direction of the through hole 211 in a direction from the electrode assembly 30 towards the cover plate 40. The through hole 211 is formed inside of the groove 212 and runs throughout a bottom wall of the groove 212. The cover plate 40 is arranged to cover in the groove 212 to cover the through hole 211. An outer surface of the cover plate 40 is flush with an outer surface of the terminal post 20.

The battery cell 100 according to an embodiment of the present application is provided with a terminal post 20 having a through hole 211, and at least a portion of a conductive portion 32 is provided in the through hole 211, thereby reducing the space occupied by the conductive portion 32 inside a case 10, so that an accommodating cavity of the case 10 can accommodate an active material-coated portion 31 of a larger size, thereby improving the volumetric energy density of the battery cell 100, further reducing the redundancy of the conductive portion 32 in the case 10, reducing the probability of short circuit between the conductive portion 32 and the active material-coated portion 31, reducing the probability of short circuit of the battery cell 100, and improving the working reliability and stability of the battery cell 100 and the battery 1000. In addition, the through hole 211 is provided inside the terminal post 20, thereby reducing the weight of the terminal post 20, and further improving the gravimetric energy densities of the battery cell 100 and the battery 1000.

Finally, it should be noted that: the above embodiments are merely used to illustrate the technical solutions of the present application, instead of imposing any limitation on the present application. Although the present application has been described in detail with reference to the above embodiments, those with ordinary skills in the art should understand that: the technical solutions disclosed in the above embodiments may still be modified, or a part or all of the technical features thereof may be replaced equivalently. These modifications and replacements are not intended to make the essence of corresponding technical solutions depart from the scope of the technical solutions of the embodiments of the present application, and should be encompassed within the scope of the claims and specification of the present application. In particular, the technical features mentioned in the various embodiments can be combined in any manner as long as there is no structural conflict. The present application is not limited to the particular Examples disclosed herein, but rather includes all technical solutions falling within the scope of the claims.

## Claims

1. A battery cell, comprising:
a case comprising a first wall;
a terminal post arranged on the first wall and having a through hole;
a cover plate arranged on one side of the terminal post and covering one respective end of the through hole; and
an electrode assembly comprising an active material-coated portion and a conductive portion connected to the active material-coated portion, the active material-coated portion being arranged in the case, at least a portion of the conductive portion being arranged in the through hole and connected to the cover plate.

2. The battery cell according to claim 1, wherein the cover plate is connected, by welding, to the conductive portion.

3. The battery cell according to any one of claims 1 to 2, wherein the cover plate has a first welding region and a second welding region, the first welding region is connected, by welding, to the conductive portion, the second welding region is used to connect, by welding, an electrical connection plate, and the first welding region and the second welding region are different regions of the cover plate.

4. The battery cell according to claim 3, wherein the first welding region and the second welding region are formed on both sides of a center line perpendicular to a length direction or a width direction of the cover plate respectively.

5. The battery cell according to claim 4, wherein a spacing between the first welding region and the second welding region is smaller than or equal to two thirds of width of the cover plate, and/or the spacing between the first welding region and the second welding region is larger than or equal to one third of the width of the cover plate.

6. The battery cell according to any one of claims 3 to 5, wherein the spacing between the first welding region and the second welding region is larger than or equal to 2 mm.

7. The battery cell according to any one of claims 3 to 6, wherein the first welding region is fitted, by welding, with the conductive portion to form a first weld pool, the second welding region is fitted, by welding, with the electrical connection plate to form a second weld pool, and the first weld pool and the second weld pool are spaced apart.

8. The battery cell according to claim 1, wherein a ratio of thickness of the cover plate to thickness of the first wall is 1-4; optionally, the ratio of the thickness of the cover plate to the thickness of the first wall is 2-3; and optionally, the thickness of the cover plate is larger than or equal to 1.5 mm and smaller than or equal to 5 mm.

9. The battery cell according to any one of claims 1 to 8, wherein the cover plate comprises a cover plate body and a boss, the cover plate body covers the one end of the through hole, the boss is arranged on one side surface of the cover plate body facing the electrode assembly and extends into the through hole, and the conductive portion is connected to the boss.

10. The battery cell according to claim 9, wherein height of the boss protruding from the one side surface of the cover plate body is 1 mm-5 mm; optionally, 1.5 mm-3 mm.

11. The battery cell according to any one of claims 9 to 10, wherein the boss is clearance fitted with the one end of the through hole, a fit clearance between the boss and the through hole is 0-0.1 mm; and optionally, the fit clearance between the boss and the through hole is smaller than or equal to 0.05 mm.

12. The battery cell according to any one of claims 9 to 11, wherein the terminal post is a negative electrode terminal post, the cover plate body and the boss are separate members, material of the cover plate body is different from material of the boss, and
the material of the boss is same as material of the conductive portion, and when the boss is welded to the conductive portion, pool depth on the cover plate is smaller than thickness of the boss.

13. The battery cell according to any one of claims 9 to 12, wherein the terminal post is a positive electrode terminal post, the boss is integrally formed with the cover plate body, and when the cover plate is welded to the conductive portion, pool depth on the boss is larger than the thickness of the boss.

14. The battery cell according to any one of claims 1 to 8, wherein the terminal post is connected, by welding, to the cover plate.

15. The battery cell according to any one of claims 1 to 8, wherein the terminal post is a hollow annular shape and defines the through hole inside.

16. The battery cell according to any one of claims 1 to 8, wherein the terminal post comprises:
an annular terminal post body defining the through hole inside;
a first ring connected to one end of the terminal post body facing the electrode assembly, extending outward along a radial direction of the terminal post body and extending along a circumferential direction of the terminal post body to form an annular shape; and
a second ring connected to other end of the terminal post body facing away from the electrode assembly, extending outward along the radial direction of the terminal post body and extending along the circumferential direction of the terminal post body to form an annular shape.

17. The battery cell according to any one of claims 1 to 8, wherein a groove is formed on one side surface of the terminal post facing away from the electrode assembly, the through hole is formed inside of the groove and runs throughout a bottom wall of the groove, and the cover plate is arranged in the groove.

18. The battery cell according to claim 17, wherein a side wall of the groove obliquely extends outward along a radial direction of the through hole in a direction from the electrode assembly towards the cover plate.

19. The battery cell according to any one of claims 17 to 18, wherein one side surface of the cover plate facing away from the electrode assembly is flush with one end surface of one end of the terminal post facing away from the electrode assembly.

20. The battery cell according to any one of claims 1 to 8, wherein the active material-coated portion comprises a current collector and an active material layer arranged on the current collector, the conductive portion comprises a tab portion electrically connected to the current collector, the tab portion comprises a plurality of tab plates, the plurality of tab plates converge at a position close to the current collector to form a first converged portion, the plurality of tab plates converge at a position away from the current collector and are connected to form a second converged portion, the first converged portion connects the second converged portion and the active material-coated portion, and at least a portion of the second converged portion is accommodated in the through hole.

21. The battery cell according to claim 20, wherein the conductive portion is fixedly connected to the cover plate through the second converged portion.

22. The battery cell according to any one of claims 20 to 21, wherein at least a portion of the first converged portion is accommodated in the through hole.

23. The battery cell according to any one of claims 1 to 8, wherein the active material-coated portion comprises a current collector and an active material layer arranged on the current collector, the conductive portion comprises a tab portion electrically connected to the current collector, the tab portion comprises a plurality of tab plates, the plurality of tab plates converge at a position close to the current collector to form a first converged portion, the plurality of tab plates converge at a position away from the current collector and are connected to form a second converged portion, and the first converged portion connects the second converged portion and the active material-coated portion; and
the conductive portion further comprises an adapter plate, the adapter plate is connected to the second converged portion, the conductive portion is electrically connected to the cover plate through the adapter plate, and at least a portion of the adapter plate is accommodated in the through hole.

24. The battery cell according to claim 23, wherein at least a portion of the second converged portion is located in the through hole; or
the second converged portion is entirely located in the through hole, and at least a portion of the first converged portion is located in the through hole.

25. The battery cell according to any one of claims 20 to 22, wherein the second converged portion extends along a surface of the cover plate, one end of the first converged portion is connected to the active material-coated portion in a direction from the electrode assembly towards the cover plate, and other end of the first converged portion obliquely extends towards a peripheral wall of the through hole and extends to connect to one end of the second converged portion.

26. A method for preparing a battery cell, comprising:
passing one end of a conductive portion through a through hole of a terminal post, and then extending out of other side of the terminal post;
connecting, by welding, the one end of the conductive portion to a cover plate on the other side of the terminal post;
covering the cover plate on one end of the through hole, and accommodating the conductive portion in the through hole; and
fixedly connecting the cover plate to the terminal post.

27. The method for preparing a battery cell according to claim 26, wherein the connecting, by welding, the one end of the conductive portion to the cover plate on the other side of the terminal post comprises:
press-fitting the other end of the conductive portion onto one side surface of the cover plate; and
laser-welding the other end of the conductive portion to the cover plate.

28. A battery, comprising the battery cell according to any one of claims 1 to 25; or the battery cell prepared using the method for preparing a battery cell according to claim 26 or 27.

29. An electrical apparatus, comprising the battery according to claim 28, wherein the battery is configured to provide electrical energy.
